# EUROPÄISCHE PATENTSCHRIFT

(11) **EP 4 037 920 B1**
(45) Veröffentlichungstag und Bekanntmachung des Hinweises auf die Patenterteilung: **19.06.2024**
(21) Anmeldenummer: 20785673.3
(22) Anmeldetag: 17.09.2020
(51) Int. Cl.: B60C 23/00, B60C 23/04, B60C 23/20

(54) **ÜBERWACHUNGSVORRICHTUNG FÜR EIN FAHRZEUG, WARNEINRICHTUNG FÜR EIN FAHRZEUG, WARNSYSTEM UND VERFAHREN ZUM BETREIBEN EINER ÜBERWACHUNGSVORRICHTUNG**
MONITORING APPARATUS FOR A MOTOR VEHICLE, WARNING DEVICE FOR A VEHICLE, WARNING SYSTEM AND METHOD FOR OPERATING A MONITORING APPARATUS
APPAREIL DE SURVEILLANCE POUR UN VÉHICULE À MOTEUR, DISPOSITIF D'AVERTISSEMENT POUR UN VÉHICULE, SYSTÈME D'AVERTISSEMENT ET PROCÉDÉ POUR FAIRE FONCTIONNER UN APPAREIL DE SURVEILLANCE

(30) Priorität: 01.10.2019 DE 102019006859; 04.08.2020 DE 102020004720
(43) Veröffentlichungstag der Anmeldung: 10.08.2022
(73) Patentinhaber: SCHROEDEL, Helmut, 82152 Planegg (DE)
(72) Erfinder: LARSEN, David, Wayne, 82152 Planegg (DE); CICCHINI, Mercurio, 82152 Planegg (DE); SCHROEDEL, Helmut, 82152 Planegg (DE)
(86) Internationale Anmeldenummer: PCT/EP2020/000160
(87) Internationale Veröffentlichungsnummer: WO 2021/063533

(56) Entgegenhaltungen:
- EP-A1- 1 262 339
- WO-A1-2014/056078
- DE-A1-102007 045 109
- DE-A1-102014 205 925
- US-A1- 2006 061 463
- US-A1- 2014 007 666
- US-A1- 2015 336 435

## Beschreibung

### Stand der Technik

Der Ansatz geht von einer Vorrichtung oder einem Verfahren nach Gattung der unabhängigen Ansprüche aus.

Problematisch bei Lastkraftfahrzeugzügen ist oftmals eine Überwachung von Achs- oder Radeigenschaften, insbesondere wobei eine nicht erkannte Überhitzung eines Rads oder einer Achse zu einer Gefährdung des Betriebs des Fahrzeugs oder gar einem Fahrzeugbrand mit der Folge einer Zerstörung dieses Fahrzeugs führt.

Das Dokument WO 2014/056078 A1 offenbart ein Radverlusterkennungs- und Diebstahlerkennungssystem für ein Fahrzeug.

Das Dokument DE 10 2007 045 109 A1 offenbart eine Radüberwachungseinrichtung.

Das Dokument EP 1 262 339 A1 offenbart einen pneumatischen Reifenmonitor.

Das Dokument DE 10 2014 205 925 A1 offenbart ein Reifenüberwachungssystem und ein Verfahren zum Überwachen eines Reifens.

Das Dokument US 2006/061463 A1 offenbart ein Reifendrucküberwachungssystem.

### Offenbarung

Vor diesem Hintergrund werden mit dem hier vorgestellten Ansatz eine Überwachungsvorrichtung für ein Fahrzeug, weiterhin ein Warnsystem, sowie, ein Verfahren zum Betreiben einer Überwachungsvorrichtung gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch 1 angegebenen Vorrichtung möglich.

Die mit dem vorgestellten Ansatz erreichbaren Vorteile bestehen darin, dass eine Möglichkeit geschaffen wird, eine Fahrzeugsicherheit für ein Fahrzeug und/oder einen Fahrzeugführer des Fahrzeugs zu erhöhen indem ein an dem Fahrzeug herrschender physikalischer Parameter überwacht wird. Eine Befestigung einer hierzu vorgestellten Überwachungsvorrichtung an dem Fahrzeug ist hierbei schnell und einfach, äußerst beständig sowie auch einfach wieder lösbar realisierbar.

Es wird eine Überwachungsvorrichtung für ein Fahrzeug vorgestellt. Die Überwachungsvorrichtung weist zumindest eine Messvorrichtung mit einer Sensoreinheit und einer Sendeeinheit auf. Die Sensoreinheit ist dazu ausgebildet, um in einer Koppelstellung an einem ersten Abschnitt einer Radnabe eines Rads des Fahrzeugs während einer Fahrt des Fahrzeugs einen physikalischen Parameter im Bereich des Rads zu sensieren. Die Sendeeinheit weist eine Befestigungseinrichtung auf, die ausgeformt ist, um die Sendeeinheit in einer Befestigungsstellung an einem zweiten Abschnitt der Radnabe des Rads oder an einer Radfelge zu befestigen, wobei die Sendeeinheit ausgebildet ist, um ein den physikalischen Parameter repräsentierendes Sensorsignal drahtlos an eine Warneinrichtung zu senden, um eine Überwachung des physikalischen Parameters zu ermöglichen.

Die Überwachungsvorrichtung ist beispielsweise für Fahrzeuge wie Sattelschlepper mit beispielsweise mehreren Anhängern und einer Vielzahl von Rädern, die sogenannten "Road-Trains" einsetzbar, welche oft lange Strecken bei gegebenenfalls hohen Außentemperaturen zurücklegen. Solche Road-Trains sind meist nur mit einem Fahrzeugführer, im Folgenden auch "Fahrzeuglenker" genannt, besetzt, und Sicherheitschecks daher mühsam, zeitaufwendig und unwirksam, um einen Reifenbrand durch plötzliches technisches Versagen trotz Sicherheitscheck rechtzeitig zu erkennen. Die hier vorgestellte Überwachungsvorrichtung ermöglicht nun vorteilhafterweise eine automatisierte Überwachung eines physikalischen Parameters im Bereich des Rads des Fahrzeugs während der Fahrt. Bei dem ersten Abschnitt kann es sich beispielsweise um eine Nabenhülse der Radnabe handeln. Die Nabenhülse kann zum Durchführen einer Fahrzeugachse des Fahrzeugs dienen. Die Sensoreinheit an der Nabenhülse zu positionieren, ermöglicht ein Sensieren des physikalischen Parameters an einer Stelle des Fahrzeugs, an der bei langen Fahrten beispielsweise hohe Temperaturen entstehen können. Bei dem zweiten Abschnitt kann es sich beispielsweise um einen Nabenflansch der Radnabe handeln, welcher sich radial von der Nabenhülse erstreckt. Alternativ kann die Sendeeinheit an der Radfelge befestigt oder befestigbar sein, welche mit der Radnabe gekoppelt oder koppelbar sein kann. Sowohl die Nabenhülse als auch der Nabenflansch und die Radfelge sind für einen Fahrzeugführer leicht zugänglich und die Überwachungsvorrichtung somit schnell und einfach montierbar. Die Warneinrichtung kann als eine in einer Fahrerkabine des Fahrzeugs angeordnete oder anordenbare Empfangseinrichtung verstanden werden, welche hier eine Möglichkeit bietet, nach Empfangen des Sensorsignals den physikalischen Parameter für den Fahrzeugführer während der Fahrt überwachen zu können. Beispielsweise kann die Sendeeinheit ausgebildet sein, um das Sensorsignal per Funk, also als ein Funksignal an die Warneinrichtung zu senden. Hierbei kann die Sendeeinheit beispielsweise dazu ausgebildet sein, um das Sensorsignal in einem definierten Zeitintervall, beispielsweise im Minutentakt, an die Warneinrichtung zu senden, um stets aktuelle physikalische Parameter bereitzustellen.

Die Sendeeinheit und die Sensoreinheit sind in unterschiedlichen Gehäusen angeordnet und über ein flexibles Verbindungskabel zur Übertragung des physikalischen Parameters miteinander verbunden Dies ermöglicht die Positionierung von Sendeeinheit und Sensoreinheit an unterschiedlichen, für deren Funktion vorteilhaften Stellen. Zusätzlich oder alternativ kann auch die Sendeeinheit und/oder die Sensoreinheit in einem gasdichten und/oder explosionsgeschützten Gehäuse angeordnet sein. Unter einem explosionsgeschützten Gehäuse kann vorliegend ein Gehäuse verstanden werden, welches gasdicht ausgestaltet ist, sodass beispielsweise ein brennbares Gas nicht in das Gehäuse eindringen und durch Komponenten der Sendeeinheit und/oder der Sensoreinheit entzündet werden kann. Auf diese Weise kann die Überwachungsvorrichtung speziell auch an Gefahrguttransportfahrzeugen eingesetzt werden, bei denen eventuell auftretende brennbare Flüssigkeiten oder Dämpfe beim Be- oder Entladen des Gefahrguttransportfahrzeugs austreten können, die sich dann eventuell durch die Sendeeinheit und/oder die Sensoreinheit entzünden oder eine Explosion verursachen.

Die Befestigungseinrichtung der Sendeeinheit kann eine Ausnehmung aufweisen, die zum formschlüssigen Befestigen der Sendeeinheit an einer Radmutter der Radnabe des Rads ausgeformt ist. Die Radmutter kann an dem Nabenflansch der Radnabe angeordnet sein und beispielsweise zum Verbinden der Radnabe mit der Radfelge dienen. Zur idealen formschlüssigen Aufnahme an der Radmutter kann die Ausnehmung in Form einer Sechskantfassung ausgeformt sein. Eine derartige Befestigung an der Radmutter ermöglicht eine Aufnahme der Sendeeinheit an einer Vielzahl unterschiedlicher Rädern, da die Radmuttern bei einer Vielzahl von Kraftfahrzeugen baugleich sind.

Gemäß einer Ausführungsform der Erfindung ist zumindest ein Bereich der Befestigungseinrichtung magnetisch ausgeformt, um die Sendeeinheit magnetisch an dem zweiten Abschnitt oder an der Radfelge oder Radmutter zu befestigen . Erfindungsgemäß weist die Befestigungseinrichtung eine Klemmeinrichtung auf, die dazu ausgebildet ist, um die Sendeeinheit an den zweiten Abschnitt oder die Radfelge oder Radmutter zu klemmen. So kann ferner eine magnetische und kraftschlüssige Verbindung zwischen der Sendeeinheit und dem Rad realisiert sein, um eine Stabilität der Sendeeinheit an dem Rad zu erhöhen. Beispielsweise kann die Ausnehmung/Sechskantfassung magnetisch ausgeformt sein, sodass sich diese für eine besonders einfache Montage bei der Montage magnetisch in eine richtige Position über die Radmutter zieht. Die Klemmeinrichtung kann ausgeformt sein, um nach einer Drehbewegung der Sendeeinheit an der Radmutter ein Verklemmen der Sechskantfassung mit den sechs Seitenflächen der Radmutter zu bewirken.

Gemäß einer Ausführungsform kann die Klemmeinrichtung eine oder mehrere, beispielsweise sechs, bewegliche Klemmklauen aufweisen. Die Klemmklauen können zusammen die Sechskantfassung ausformen. Die Klemmeinrichtung kann über ein Außengewinde in ein Gehäuse der Sendeeinheit eingeschraubt oder einschraubbar sein. Gemäß einer Ausführungsform kann die Klemmeinrichtung in einem Ruhezustand, wenn die Radmutter nicht in der Sechskantfassung aufgenommen ist, ein zylindrisches Außengewinde aufweisen, insbesondere wobei das Außengewinde konisch verformt sein kann, wenn die Radmutter in der Sechskantfassung aufgenommen ist.

Es ist weiterhin von Vorteil, wenn die Sendeeinheit gemäß einer Ausführungsform ausgebildet ist, um das Sensorsignal mit einer Sendeleistung von mehr als 100 mW an die Warneinrichtung zu senden und/oder einen Repeater aufweist, um das Sensorsignal zu verstärken und/oder ein zweites Sensorsignal weiterzuleiten. Der Repeater kann beispielsweise dazu dienen, um das empfangene zweite Sensorsignal von einer der Messvorrichtung baulich entsprechenden zweiten Messvorrichtung zu verstärken und/oder weiterzuleiten, welche beispielsweise weiter von der Warneinrichtung entfernt sein kann, als die Messvorrichtung. Eine Sendeleistung von mehr als 100 mW ermöglicht eine Reichweite von mehr als 100 Meter, um auch die Räder von sehr langen Sattelschleppern mit vielen Anhängern überwachen zu können.

Die Sendeeinheit kann ferner ausgebildet sein, um das Sensorsignal zu senden, das eine Identifikationsinformation umfasst, die eine Identifikation der Messvorrichtung von einer anderen Messvorrichtung ermöglicht, und/oder das eine Ladezustandsinformation einer Energiespeichereinrichtung der Messvorrichtung umfasst. Die Identifikationsinformation ermöglicht eine Zuordnung des durch das Sensorsignal übermittelten physikalischen Parameters zu dem entsprechenden Rad. Die Ladezustandsinformation kann den Ladezustand der Energiespeichereinrichtung anzeigen, um beispielsweise ein frühzeitiges Aufladen zu ermöglichen, wenn der Ladezustand niedrig ist.

Gemäß einer Ausführungsform kann die Messvorrichtung ein Solarmodul aufweisen, das dazu ausgebildet ist, um eine Energiespeichereinrichtung der Messvorrichtung mittels Solarenergie aufzuladen, um eine Versorgungsenergie zum Betreiben der Messvorrichtung bereitzustellen, und/oder einen Steckanschluss zum externen Aufladen der Energiespeichereinrichtung aufweisen. Die Energiespeichereinrichtung kann zumindest einen Akkumulator umfassen. Das Solarmodul und/oder der Steckanschluss können an oder in der Sendeeinheit angeordnet sein. So kann die Versorgungsenergie besonders praktisch und ohne Aufladestopps durch Sonneneinstrahlung bereitgestellt werden oder aber die Energiespeichereinrichtung von einer Person über den Steckanschluss aufgeladen werden, wenn beispielsweise die Sonne nicht genügend scheint. Dies kann eine sichere Energieversorgung für die Messvorrichtung ermöglichen.

Alternativ oder zusätzlich zu dem mindestens einen magnetisch ausgeformten Bereich der Befestigungseinrichtung weist die Sensoreinheit zumindest einen Magneten auf, der dazu ausgebildet ist, um die Sensoreinheit magnetisch an der Radnabe des Rads zu koppeln. So kann die Sensoreinheit beispielsweise schnell und einfach magnetisch an die Nabenhülse gekoppelt werden. Dies ermöglicht eine einfache Montage für eine Person. Bei dem Magneten kann es sich um einen Neodymium-Magneten handeln.

Es ist ferner von Vorteil, wenn die Sensoreinheit eine Temperatursonde aufweist, die dazu ausgebildet ist, um als den physikalischen Parameter eine Temperatur zu sensieren und/oder einen Drucksensor aufweist, um als den physikalischen Parameter einen Reifendruck zu sensieren. Ein Wissen um den Reifendruck kann dazu dienen, um einen sicherheitskritisch niedrigen oder sicherheitskritisch hohen Reifendruck zu verhindern oder aber, um unter Verwendung des Reifendrucks die Temperatur zu bestimmen. Die Temperatursonde kann einen mit einem Kupferblech verbundenen Temperatursensor aufweisen. Das Kupferblech kann in den zu sensierenden Bereich ragen, hierzu beispielsweise die Nabenhülse kontaktieren, um die dort herrschende Temperatur besonders verlustarm aufzunehmen und zu dem Temperatursensor übertragen zu können. Ein Wissen um die Temperatur kann dazu dienen, um eine sicherheitskritisch hohe Temperatur, welche beispielsweise ein baldiges Feuer an einer Achse des Fahrzeugs bewirken könnte, erkennbar zu machen oder zu verhindern.

Gemäß einer Ausführungsform kann die Überwachungsvorrichtung zumindest eine zweite Messvorrichtung mit einer zweiten Sensoreinheit, die dazu ausgebildet ist, um in einer Koppelstellung an einem ersten Abschnitt einer Radnabe eines zweiten Rads des Fahrzeugs während einer Fahrt des Fahrzeugs einen zweiten physikalischen Parameter im Bereich des zweiten Rads zu sensieren, und mit einer zweiten Sendeeinheit, die eine zweite Befestigungseinrichtung aufweist, die ausgeformt ist, um die zweite Sendeeinheit in einer Befestigungsstellung an einem zweiten Abschnitt der Radnabe oder einer zweiten Radfelge des zweiten Rads zu befestigen, aufweisen, wobei die zweite Sendeeinheit ausgebildet ist, um ein den zweiten physikalischen Parameter repräsentierendes zweites Sensorsignal drahtlos an die Warneinrichtung zu senden, um eine Überwachung des zweiten physikalischen Parameters zu ermöglichen. Dank mehrerer solcher beispielsweise baugleicher Messvorrichtungen können physikalische Parameter an mehreren Rädern sensiert und überwacht werden. Die Überwachungsvorrichtung kann eine beliebige Anzahl weiterer derartiger Messvorrichtungen aufweisen, welche abhängig von einer Radanzahl an Rädern des Fahrzeugs sein kann. So kann die Überwachungsvorrichtung idealerweise für jedes Rad des Fahrzeugs eine zugeordnete Messvorrichtung aufweisen.

Es wird ferner eine Warneinrichtung für ein Fahrzeug vorgestellt, wobei die Warneinrichtung ausgebildet ist, um das Sensorsignal einer Überwachungsvorrichtung in einer der vorangehend beschriebenen Varianten einzulesen und unter Verwendung des Sensorsignals eine optische, akustische und/oder haptische Ausgabe des physikalischen Parameters auf einer Ausgabeeinheit zu bewirken. Die Ausgabe kann dazu dienen, um den Fahrzeugführer des Fahrzeugs über den physikalischen Parameter in Kenntnis zu setzen. Die Ausgabeeinheit kann ein Display, Lautsprecher und/oder bewegliches Gerät, beispielsweise ein vibrationsfähiges Gerät, aufweisen. Die Ausgabeeinheit kann Teil der Warneinrichtung oder eine in dem Fahrzeug bereits vorhandene Kommunikationseinrichtung sein. Zum Empfangen des Sensorsignals kann die Warneinrichtung eine Empfangseinrichtung in Form einer Antenne aufweisen. Die Warneinrichtung kann ferner dazu ausgebildet sein, um unter Verwendung des zweiten Sensorsignals eine optische, akustische und/oder haptische Ausgabe des zweiten physikalischen Parameters auf der Ausgabeeinheit zu bewirken. Entsprechend kann die Warneinrichtung dazu ausgebildet sein, um unter Verwendung einer beliebigen Anzahl weiterer Sensorsignale von weiteren Messvorrichtungen der Überwachungsvorrichtung je eine optische, akustische und/oder haptische Ausgabe der diesen zugeordneten weiteren physikalischen Parameter auf der Ausgabeeinheit zu bewirken. So kann der physikalische Parameter mehrerer oder aller Räder des Fahrzeugs von dem Fahrzeugführer während der Fahrt überwacht werden.

Es ist weiterhin von Vorteil, wenn die Warneinrichtung gemäß einer Ausführungsform dazu ausgebildet ist, um ein Warnsignal zu erzeugen, wenn der physikalische Parameter einen definierten Schwellenwert erreicht oder überschreitet. Der definierte Schwellenwert kann eine Maximaltemperatur von beispielsweise 75°C an der Radnabe repräsentieren. Das Warnsignal kann dazu ausgebildet sein, um eine akustisch, optisch und/oder haptisch wahrnehmbare Warnung für eine Person auf beispielsweise der Ausgabeeinheit zu bewirken. Ferner kann die Warneinrichtung gemäß einer Ausführungsform dazu ausgebildet sein, um ein weiteres Warnsignal zu erzeugen, wenn die Ladezustandsinformation einen definierten Ladezustandsschwellenwert erreicht oder unterschreitet, wobei der definierte Ladezustandsschwellenwert einen niedrigen oder ladebedürftigen Akkustand von beispielsweise 20 Prozent der Ladekapazität der Energiespeichereinrichtung repräsentieren kann. Dies kann sicherstellen, dass der Fahrzeugführer auf eine erhöhte Temperatur an einer Radnabe und/oder ein bevorstehendes Abschalten der Überwachungsvorrichtung aufgrund von fehlender Versorgungsenergie aufmerksam gemacht wird.

Es wird ferner ein Warnsystem vorgestellt, das eine der vorangehend vorgestellten Überwachungsvorrichtungen und eine der vorangehend vorgestellten Warneinrichtungen aufweist. Ein solches Warnsystem bietet vorteilhafterweise eine Möglichkeit einer vollumfänglichen Überwachung eines physikalischen Parameters, beispielsweise einer Temperatur, an zumindest einem Rad des Fahrzeugs mit Ausgabe des Parameters an den Fahrzeugführer.

Ein Verfahren zum Betreiben einer Überwachungsvorrichtung in einer der vorangehend beschriebenen Varianten umfasst einen Schritt des Sensierens und einen Schritt des Sendens. Im Schritt des Sensierens wird der physikalische Parameters im Bereich des Rads unter Verwendung der Sensoreinheit in der Koppelstellung an dem ersten Abschnitt der Radnabe des Rads des Fahrzeugs während der Fahrt des Fahrzeugs sensiert. Im Schritt des Sendens wird ein den physikalischen Parameter repräsentierendes Sensorsignal an die Warneinrichtung unter Verwendung der Sendeeinheit gesendet, die mittels der Befestigungseinrichtung in der Befestigungsstellung an dem zweiten Abschnitt der Radnabe oder der Radfelge des Rads befestigt ist, um die Überwachung des physikalischen Parameters zu ermöglichen.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigen:
Fig. 1 eine perspektivische Darstellung eines Ausführungsbeispiels einer Überwachungsvorrichtung für ein Fahrzeug;
Fig. 2 eine perspektivische Darstellung eines Ausführungsbeispiels einer Überwachungsvorrichtung für ein Fahrzeug;
Fig. 3 eine perspektivische Darstellung einer Rückseite einer Sendeeinheit einer Überwachungsvorrichtung gemäß einem Ausführungsbeispiel;
Fig. 4 eine perspektivische Explosionsdarstellung einer Vorderseite einer Sendeeinheit gemäß einem Ausführungsbeispiel;
Fig. 4a eine perspektivische Darstellung einer Vorderseite einer geöffneten Sendeeinheit gemäß einem Ausführungsbeispiel;
Fig. 5 eine perspektivische Explosionsdarstellung einer Rückseite einer Sendeeinheit gemäß einem Ausführungsbeispiel;
Fig. 6 eine perspektivische Darstellung einer Rückseite einer Sendeeinheit gemäß einem Ausführungsbeispiel;
Fig. 6a eine perspektivische Darstellung einer Rückseite einer Sendeeinheit gemäß einem Ausführungsbeispiel;
Fig. 7 eine perspektivische Explosionsdarstellung einer Befestigungseinrichtung einer Sendeeinheit gemäß einem Ausführungsbeispiel;
Fig. 8 eine seitliche Querschnittsdarstellung einer Befestigungseinrichtung einer Sendeeinheit gemäß einem Ausführungsbeispiel;
Fig. 8a eine seitliche Querschnittsdarstellung einer Befestigungseinrichtung einer Sendeeinheit gemäß einem Ausführungsbeispiel;
Fig. 8b eine perspektivische Darstellung einer Klemmeinrichtung einer Sendeeinheit gemäß einem Ausführungsbeispiel;
Fig. 8c eine perspektivische Darstellung eines Ausschnitts einer Klemmeinrichtung gemäß einem Ausführungsbeispiel;
Fig. 8d eine perspektivische Darstellung einer Klemmeinrichtung einer Sendeeinheit gemäß einem Ausführungsbeispiel;
Fig. 9 eine perspektivische Darstellung einer Sensoreinheit einer Überwachungsvorrichtung gemäß einem Ausführungsbeispiel;
Fig. 9a eine perspektivische Darstellung einer Sensoreinheit gemäß einem Ausführungsbeispiel;
Fig. 10 eine perspektivische Darstellung eines Ausführungsbeispiels einer Warneinrichtung für ein Fahrzeug;
Fig. 10a eine perspektivische Darstellung einer Basisstation einer Warneinrichtung gemäß einem Ausführungsbeispiel;
Fig. 11 eine Ausgabeeinheit zur Verwendung mit einem Warnsystem gemäß einem Ausführungsbeispiel;
Fig. 12 eine schematische Aufsicht auf ein Fahrzeug mit einer Überwachungsvorrichtung gemäß einem Ausführungsbeispiel;
Fig. 12a eine schematische Seitenansicht eines Fahrzeugs mit einer Überwachungsvorrichtung gemäß einem Ausführungsbeispiel;
Fig. 13 eine schematische Darstellung eines Fahrzeugs mit einem Warnsystem gemäß einem Ausführungsbeispiel; und
Fig. 14 ein Ablaufdiagramm eines Verfahrens gemäß einem Ausführungsbeispiel zum Betreiben einer Überwachungsvorrichtung.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

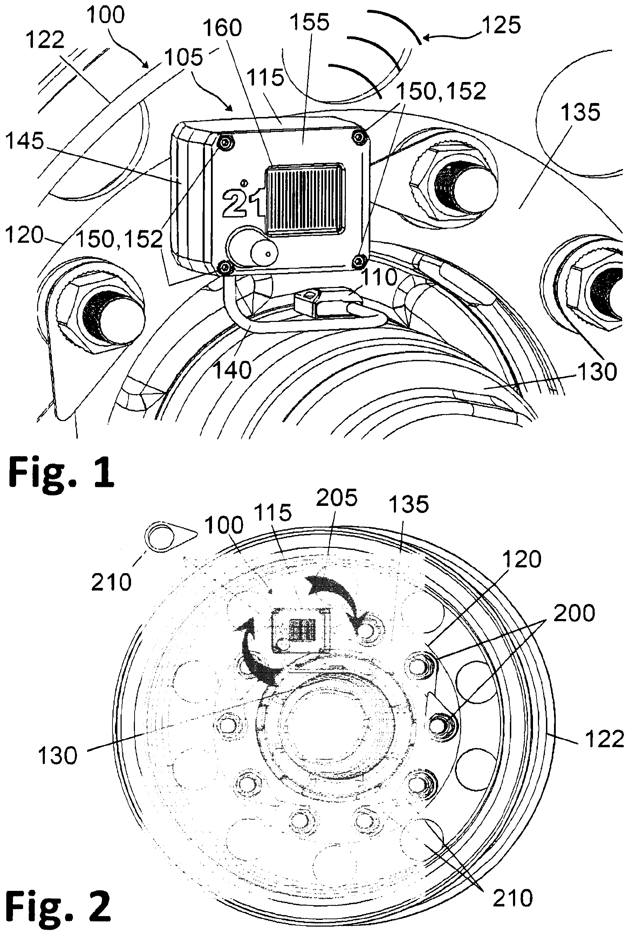

Fig. 1 zeigt eine perspektivische Darstellung eines Ausführungsbeispiels einer Überwachungsvorrichtung 100 für ein Fahrzeug. Die Überwachungsvorrichtung 100 ist gemäß diesem Ausführungsbeispiel von einer Vorderseite gezeigt.

Die Überwachungsvorrichtung 100 weist zumindest eine Messvorrichtung 105 mit einer Sensoreinheit 110 und einer Sendeeinheit 115 auf. Die Sensoreinheit 110 ist dazu ausgebildet, um in einer Koppelstellung an einem ersten Abschnitt einer Radnabe 120 eines Rads des Fahrzeugs während einer Fahrt des Fahrzeugs einen physikalischen Parameter im Bereich des Rads zu sensieren. Die Sendeeinheit 115 weist eine Befestigungseinrichtung auf, die ausgeformt ist, um die Sendeeinheit 115 in einer Befestigungsstellung an einem zweiten Abschnitt der Radnabe 120 des Rads oder an einer Radfelge 122 zu befestigen, wobei die Sendeeinheit 115 ausgebildet ist, um ein den physikalischen Parameter repräsentierendes Sensorsignal 125 drahtlos an eine Warneinrichtung zu senden, um eine Überwachung des physikalischen Parameters zu ermöglichen.

Die Überwachungsvorrichtung 100 ist für Fahrzeuge wie Sattelschlepper mit beispielsweise mehreren Anhängern und einer Vielzahl von Rädern, sogenannte "Road-Trains" einsetzbar, welche lange Strecken bei gegebenenfalls hohen Außentemperaturen zurücklegen. Gemäß diesem Ausführungsbeispiel ist die Überwachungsvorrichtung 100 in einem betriebsbereiten Zustand an der Radnabe 120 montiert, wobei die Sensoreinheit 110 in der Koppelstellung an dem ersten Abschnitt gekoppelt ist, der gemäß diesem Ausführungsbeispiel als eine Nabenhülse 130 der Radnabe 120 ausgeformt ist, und die Sendeeinheit 115 in der Befestigungsstellung an dem zweiten Abschnitt, der gemäß diesem Ausführungsbeispiel als ein Nabenflansch 135 der Radnabe 120 ausgeformt ist, befestigt ist. Die Nabenhülse 130 ist zum Durchführen einer Fahrzeugachse des Fahrzeugs ausgeformt. Der Nabenflansch 135 erstreckt sich gemäß diesem Ausführungsbeispiel radial von der Nabenhülse 130 weg. Gemäß einem alternativen Ausführungsbeispiel ist die Sendeeinheit 115 an der Radfelge 122 befestigt, welche mit der Radnabe 120 gekoppelt ist. Gemäß diesem Ausführungsbeispiel ist die Sendeeinheit 115 ausgebildet, um das Sensorsignal 125 per Funk an die Warneinrichtung zu senden, die gemäß einem Ausführungsbeispiel in einer Fahrerkabine des Fahrzeugs angeordnet oder anordenbar ist.

Gemäß diesem Ausführungsbeispiel sind die Sendeeinheit 115 und die Sensoreinheit 110 in unterschiedlichen Gehäusen angeordnet und über ein flexibles Verbindungskabel 140 zur Übertragung des physikalischen Parameters miteinander verbunden

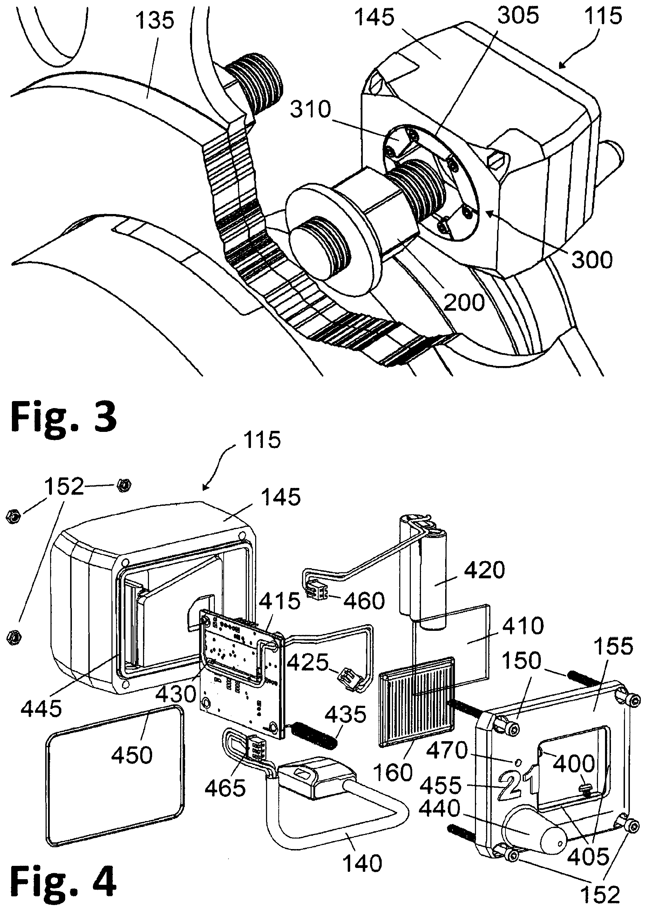

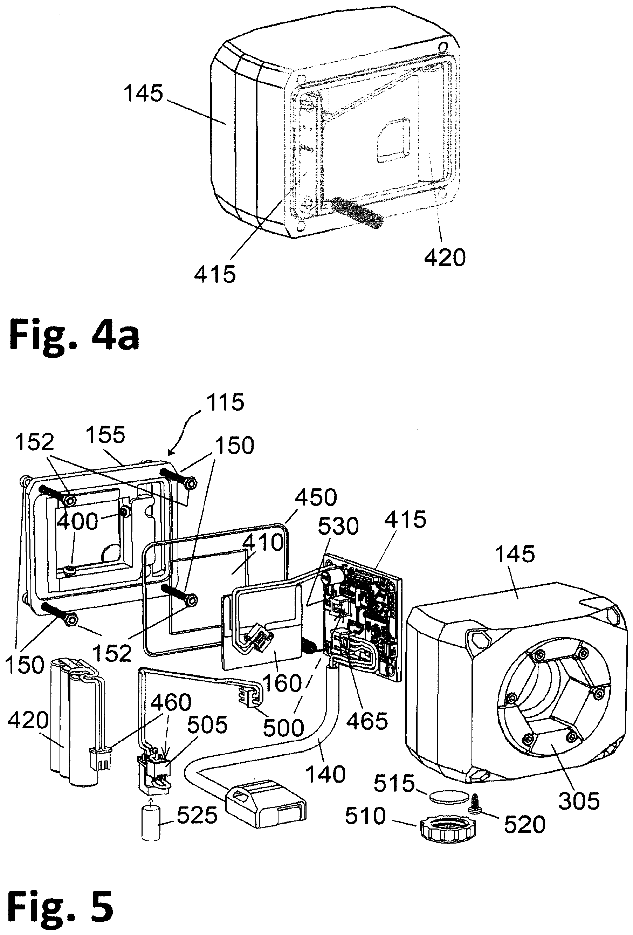

Aus einem Gehäuseboden eines Sendeeinheitsgehäuses 145 der Sendeeinheit 115, die auch als "Warneinheit" bezeichnet werden kann, führt gemäß diesem Ausführungsbeispiel das Verbindungskabel 140 in Form eines kurzen Kabels zur Sensoreinheit 110 in Form einer Temperatursonde, welche gemäß diesem Ausführungsbeispiel an der Nabenhülse 130 der Radnabe 120 unmittelbar über einem innenliegenden Lager magnetisch haftet. Lediglich beispielhaft verschließen gemäß diesem Ausführungsbeispiel vier Schrauben 150 mit Gehäusemuttern 152 das Sendeeinheitsgehäuse 145 mit gemäß diesem Ausführungsbeispiel einem Solardeckel 155 des Sendeeinheitsgehäuses 145 gas- und/oder druckwasserdicht mit Hilfe einer in Fig. 4 gezeigten Dichtung 450.

Gemäß diesem Ausführungsbeispiel weist die Messvorrichtung 105 ferner ein Solarmodul 160 auf, das dazu ausgebildet ist, um eine Energiespeichereinrichtung der Messvorrichtung 105 mittels Solarenergie aufzuladen, um eine Versorgungsenergie zum Betreiben der Messvorrichtung 105 bereitzustellen, und/oder einen Steckanschluss zum externen Aufladen der Energiespeichereinrichtung auf. Die Energiespeichereinrichtung umfasst gemäß einem Ausführungsbeispiel zumindest einen Akkumulator und/oder ist in der Sendeeinheit 115 aufgenommen. Das Solarmodul 160, das auch als "Solarzelle" bezeichnet werden kann, und/oder der Steckanschluss sind gemäß diesem Ausführungsbeispiel an oder in der Sendeeinheit 115 angeordnet. Die Sendeeinheit 115 ist gemäß diesem Ausführungsbeispiel ausgebildet, um das Sensorsignal 125 mit einer Sendeleistung von mehr als 100 mW an die Warneinrichtung zu senden und/oder weist einen Repeater auf, um das Sensorsignal 125 zu verstärken und/oder ein zweites Sensorsignal weiterzuleiten. Der Repeater ist gemäß einem Ausführungsbeispiel ausgebildet, um das zweite Sensorsignal von einer der Messvorrichtung 105 baulich entsprechenden zweiten Messvorrichtung zu empfangen und zu verstärken und/oder weiterzuleiten, wobei die zweite Messvorrichtung gemäß einem Ausführungsbeispiel weiter von der Warneinrichtung entfernt ist, als die Messvorrichtung 105. Die Sendeeinheit 115 ist somit gemäß diesem Ausführungsbeispiel ausgebildet, um die Sensorsignale 125 als erheblich stärkere Funksignale an die Warneinrichtung zu senden, als sonst in Kfz integrierten Funksystemen üblich ist. Die Sendeeinheit 115 ist zusätzlich oder alternativ ausgebildet, um das Sensorsignal 125 zu senden, das eine Identifikationsinformation umfasst, die eine Identifikation der Messvorrichtung 105 von einer anderen Messvorrichtung ermöglicht, und/oder das eine Ladezustandsinformation der Energiespeichereinrichtung der Messvorrichtung 105 umfasst.

Die Sensoreinheit 110 weist gemäß diesem Ausführungsbeispiel zumindest einen Magneten auf, der dazu ausgebildet ist, um die Sensoreinheit 110 magnetisch an der Radnabe 120, hier an der Nabenhülse 130, zu koppeln.

Gemäß einem Ausführungsbeispiel weist die Überwachungsvorrichtung 100 zumindest die zweite Messvorrichtung oder eine beliebige Anzahl weiterer Messvorrichtungen 105 auf.

Die hier vorgestellte Überwachungsvorrichtung 100 kann auch als ein "Achsenfeuer-Warnsystem", oder englisch "Axle Fire Warning System", kurz "AFWS", bezeichnet werden. Das AFWS warnt gemäß einem Ausführungsbeispiel rechtzeitig vor Reifenbränden und ist einsetzbar für lange Lastzüge mit beispielsweise mehr als einem Anhänger hinter einer Zugmaschine, den sogenannten Road-Trains, wie diese in Australien, Brasilien und in den USA üblich sind. Das AFWS wurde in erster Linie für Fahrzeuge für den Transport von explosionsfähigem Gefahrengut entwickelt, um das Leben des Fahrzeuglenkers und gegebenenfalls unbeteiligter Personen in der Nähe zu schützen. Das AFWS schützt Lastzüge jeglicher Länge, gleichgültig welche Art von Ladung transportiert wird.

In Australien und Brasilien sind auf öffentlichen Straßen mehrere Anhänger zulässig, in den USA sind zwei Anhänger erlaubt, während in Deutschland nur ein Anhänger gezogen werden darf. In Australien kommt es durch die große Anzahl von Rädern mehrerer Anhänger regelmäßig zu Reifenbränden durch eine sich bis zum Glühen erhitzte Achsennabe, meistens infolge einer Fehlfunktion einer Radbremse.

Ohne Abkühlung mit genügend Wasser lässt sich der Reifenbrand nicht löschen. Ein Löschversuch mit Hilfe eines mitgeführten Feuerlöschers kann die Flammen zwar momentan ersticken, aber das heiße Metall der Achse, Nabe und Felge entfacht jedoch den Reifen immer wieder von Neuem, infolge der entzündlichen Gase, welche durch das schmorende Reifenmaterial entstehen. Schließlich geht der gesamte Lastzug in Flammen auf.

Beim Transport von allgemeinem Frachtgut wird der Schaden über die Versicherung geregelt. Bei Gefahrengut von explosiver Ladung kann ein Achsenfeuer in einer Katastrophe enden, insbesondere wenn die Ladung massenexplosionsfähig ist. Bisher gibt es kein funktionierendes Überwachungssystem für lange Lastzüge mit mehreren Anhängern, welches dem Fahrzeuglenker mitteilt, ob sich eines der vielen Räder plötzlich erhitzt und ein spontaner Reifenbrand bevorsteht.

Ein Reifenbrand entsteht durch ein sich zerreibendes Achsenlager, fast immer verursacht durch eine sich plötzlich schließende Bremse. Ein einzelnes, bremsendes Rad wird vom Fahrzeuglenker nicht bemerkt, da diese geringe Bremswirkung das Fahrverhalten eines langen Lastzuges nicht beeinflusst.

Die Erhitzung eines Rades wird nur durch Zufall bemerkt, meistens aber erst, wenn es bereits zu spät ist. Als Maßnahme dagegen wird das Fahrzeug in festgelegten Zeitabständen angehalten, in der Regel alle zwei Stunden und die Temperatur der Radnaben und Felgen mit einem Infrarot-Thermotester gemessen. Die Messergebnisse werden handschriftlich protokolliert.

Manche Lastzüge haben einen unter Druckluft stehenden Löschwassertank einschließlich langem Schlauch installiert mit denen ein Achsenfeuer gegebenenfalls erfolgreich gelöscht werden kann, falls der Fahrer, der nur auf sich selbst angewiesen dazu physisch in der Lage ist. Die australischen Road-Trains sind nämlich nur mit einer einzigen Person, dem Fahrzeugführer oder -lenker besetzt.

Ist die Ladung explosiv, entsteht das Dilemma zwischen dem Versuch, das Feuer zu löschen oder sich möglichst schnell zu entfernen, um einen notwendigen Sicherheitsabstand zu erreichen. Dieser Mindestabstand kann einen Kilometer oder mehr betragen, falls eine Massenexplosion droht.

Wie die Praxis zeigt, kann eine Bremse jederzeit durch eine Fehlfunktion einen Bremsvorgang auslösen, auch unmittelbar nach erfolgtem Rundgang und Prüfung der Räder. Eine andauernde Bremswirkung erhitzt die Achse und die hohen Temperaturen vernichten die Schmierung im Achsenlager. Die Achse einschließlich Radnabe, in deren Inneren sich das Radlager befindet, fängt an zu Glühen und überträgt die Hitze über den Nabenflansch auf die Felge und in das Reifenmaterial. Die entstehenden Reifengase entzünden sich dann explosionsartig. Bei explosiver Ladung sind der Fahrer und ein großer Teil der Umgebung in großer Gefahr.

In Australien sind die Fahrzeuglenker alleine unterwegs, also ohne Beifahrer. Sie durchqueren stundenlang unbewohnte und sehr entlegene Landesteile oft auf Schotterstraßen mit geringstem Straßenverkehr und sorgen für nahezu den gesamten Warentransport des Landes. Die Tagestemperaturen erreichen in manchen Gebieten 50 Grad Celsius. Unter solchen Bedingungen mit einem Reifenbrand konfrontiert zu werden ist kaum vorstellbar.

Die hier vorgestellte Überwachungsvorrichtung 100 realisiert nun für Road-Trains ein System, welches vor einem Reifenbrand schützt. Diese wirkungsvolle Überwachungsvorrichtung 100 ermittelt hierzu laufend den physikalischen Parameter in Form der jeweiligen Nabentemperatur der Räder und überträgt diese an die Warneinheit, um den Fahrzeuglenker rechtzeitig von einer plötzlichen Überhitzung eines betroffenen Rades zu warnen, so dass eine Löschaktion grundsätzlich verhindert wird. Die Überwachungsvorrichtung 100 ist auch schnell und ohne Aufwand übertragbar, wenn die Anhänger willkürlich ausgetauscht werden.

Ein Road-Train setzt sich zusammen aus Zugmaschine, Aufliegern, Anhängern und Dollies. Da eine Temperaturmessung durch Messeinheiten nur direkt an den Rädern sinnvoll ist, nämlich an der sich drehenden Radnabe 120, wo die Hitze am innen liegenden Lager entsteht und sich von dort auf die Radfelge 122 ausbreitet, ist wegen der Drehbewegung der Nabe eine feste Verdrahtung zur Fahrerkabine ausgeschlossen. Eine Datenübertragung findet daher bei der Überwachungsvorrichtung 100 über eine Funkverbindung stattfinden.

Road-Trains sind über fünfzig Meter lang und verlangen eine starke Sendeleistung vom jeweiligen Rad zur Warneinrichtung in der Fahrerkabine, weshalb die Sendeleistung der hier vorgestellten Überwachungsvorrichtung 100 diese Entfernung und die Abschirmung durch die Ladung vor allem in Kurven vorteilhafterweise zuverlässig überwindet. Ferner ist gemäß diesem Ausführungsbeispiel eine notwendige unabhängige, wartungsfreie und zuverlässige Stromversorgung bei der Überwachungsvorrichtung 100 realisiert.

Entsprechend der Logistik in einem Flottenbetrieb mit ständigem Wechsel der Fahrzeuge untereinander erlaubt das Achsenfeuer-Warnsystem ferner vorteilhafterweise einen Wechsel der Überwachungsvorrichtung 100 ohne Aufwand. Die Messvorrichtung 105 ist hierzu schnell und einfach bei einem Anhängerwechsel demontierbar/montierbar und nicht etwa fest an ein Radbolzengewinde befestigt, beispielsweise verschraubt.

Zukünftige integrierte Systeme werden die Erkennung beim Andocken eines Anhängers in einer elektronischen Lösung finden. Die Überwachungsvorrichtung 100 ermöglicht eine nachrüstbare Variante in Form eines "Plug and Play"-Systems, bei dem die Messvorrichtung 105 sofort von einem Rad auf ein anderes Rad in sekundenschnelle übergewechselt werden kann.

Für den Transport von explosionsfähigem Gefahrengut ist es notwendig, dass Geräte mit eigenen Stromquellen explosionssicher sind, d. h., in einer explosiven Atmosphäre dürfen sie keine Zündquelle darstellen. Nur explosionssicher zertifizierte Geräte können für Gefahrengut eingesetzt werden, welche besondere Konstruktionsmerkmale erfordern, bevor diese zertifiziert werden können.

Das AFWS ist als explosionssicheres Ausführungsbeispiel anhand eines Road-Trains für Gefahrengut dargestellt. Da die technischen Ausführungen von Achsen, Naben und Felgen im Lastkraftwagen- und Anhängerbau einer großen Vielfalt unterliegen, ist es ferner notwendig, ein Achsenfeuer-Warnsystem zu entwickeln, dessen Sendeeinheit/en 115 und Sensoreinheit/en 110 an allen LKW-Rädern andockbar sind. Dies ist bei der hier vorgestellten Überwachungsvorrichtung 100 realisiert.

Fig. 2 zeigt eine perspektivische Darstellung eines Ausführungsbeispiels einer Überwachungsvorrichtung 100 für ein Fahrzeug. Dabei kann es sich um die anhand von Figur 1 beschriebene Überwachungsvorrichtung 100 handeln, die wie in Fig. 1 beschrieben in dem betriebsbereiten Zustand an der Radnabe 120 montiert ist.

Die Sendeeinheit 115 ist gemäß diesem Ausführungsbeispiel mit einem oder mehreren Neodymium-Magneten ausgebildet und/oder umschließt mit dem Sendeeinheitsgehäuse eine Radmutter 200 der Radnabe 120 oder Radfelge 122, und/oder zieht sich magnetisch über den Stahl der Radmutter 200. Durch etwa eine Viertelumdrehung der Sendeeinheit 115 im Uhrzeigersinn, hier mit den Pfeile 205 dargestellt, verklemmt sich das Sendeeinheitsgehäuse der Sendeeinheit 115 mit der Radmutter 200 und kann nicht mehr abgezogen werden. Ein Drehen gegen den Uhrzeigersinn löst die Verklemmung und die Sendeeinheit 115 ist nach Überwindung der Magnetkraft abziehbar. Ein gemäß diesem Ausführungsbeispiel an dieser Stelle befindlicher Radmutter-Indikator 210 wird durch die Sendeeinheit 115 ersetzt.

Die Überwachungsvorrichtung 100 realisiert vorteilhafterweise ein gebrauchsfertiges, sekundenschnell anzubringendes bzw. sofort abzunehmendes "Plug and Play"-Achsenfeuer-Warnsystem mit gemäß einem Ausführungsbeispiel einem Warnbildschirm, zum rechtzeitigen Erkennen von bevorstehenden Reifenbränden, insbesondere an langen Lastzügen mit mehreren Anhängern und zahlreichen Rädern, den sogenannten Road-Trains, geeignet für den Transport von explosivem Gefahrengut, explosionsgeschützt für den Einsatz innerhalb explosiver Atmosphären mit folgenden Merkmalen:
- der Sendeeinheit 115, sofort haftend an gemäß diesem Ausführungsbeispiel einer einzelnen Radmutter 200 und mit gemäß diesem Ausführungsbeispiel magnetisch haftender Sensoreinheit 110, beispielsweise in Form einer Temperatursonde, auf der Radnabe 120;
- optional einer eigenen, unabhängigen, sich selbst aufladenden Stromquelle integriert in der Sendeeinheit 115 zur kontinuierlichen Temperaturübermittlung des Naben- und Felgenbereiches durch eine leistungsstarke Funkübertragung an die Warneinrichtung, beispielsweise in Form eines Bildschirms mit Warnfunktion im Wirkungsbereich des Fahrzeuglenkers; und
- optional einer Fernabfrage der Daten von einer beliebigen geografischen Stelle über das Internet, beim Durchfahren oder Aufenthalt in vom Mobilfunk erfassten Gebieten.

Gemäß diesem Ausführungsbeispiel wird die Anbringung der Sendeeinheit 115 der Überwachungsvorrichtung 100 allein durch eine Haftung an den Sechskantoberflächen einer einzigen Radmutter 200 erreicht und dabei ein Schnellwechsel der Überwachungsvorrichtung 100 vom Rad eines abzuhängenden Trailers auf das Rad eines anzuhängenden Trailers erlaubt und deshalb ein willkürlicher Austausch von Anhängern und Zugfahrzeugen mit prinzipiell allen Typen von LKW-Anhänger-Radfelgen ermöglicht.

Fig. 3 zeigt eine perspektivische Darstellung einer Rückseite einer Sendeeinheit 115 gemäß einem Ausführungsbeispiel. Dabei kann es sich um ein Ausführungsbeispiel der in Fig. 1 oder 2 beschriebenen Sendeeinheit 115 handeln.

Die Befestigungseinrichtung 300 der Sendeeinheit 115 ist gemäß diesem Ausführungsbeispiel an der Rückseite der Sendeeinheit 115, hier an der Rückseite des Sendeeinheitsgehäuses 145, angeordnet und/oder weist eine Ausnehmung auf, die zum formschlüssigen Befestigen der Sendeeinheit 115 an der Radmutter 200 der Radnabe des Rads ausgeformt ist. Die Radmutter 200 ist gemäß diesem Ausführungsbeispiel an dem Nabenflansch 135 und/oder der Radfelge angeordnet. Zusätzlich oder alternativ ist gemäß diesem Ausführungsbeispiel zumindest ein Bereich der Befestigungseinrichtung 300 magnetisch ausgeformt, um die Sendeeinheit 115 magnetisch an der Radmutter 200, dem Nabenflansch 135 oder an der Radfelge zu befestigen und/oder die Befestigungseinrichtung 300 weist eine Klemmeinrichtung 305 auf, die dazu ausgebildet ist, um die Sendeeinheit 115 an die Radmutter 200, den Nabenflansch 135 oder die Radfelge zu klemmen. Die Klemmeinrichtung 305, die auch als "Klemmfassung" bezeichnet werden kann, weist gemäß diesem Ausführungsbeispiel eine Mehrzahl von Klemmklauen 310, hier beispielsweise sechs Klemmklauen 310, auf.

Fig. 4 zeigt eine perspektivische Explosionsdarstellung einer Vorderseite einer Sendeeinheit 115 gemäß einem Ausführungsbeispiel. Dabei kann es sich um ein Ausführungsbeispiel der in Fig. 1, 2 oder 3 beschriebenen Sendeeinheit 115 handeln.

Gemäß diesem Ausführungsbeispiel fixieren zwei Schneidschrauben 400 das Solarmodul 160 in einem dafür vorgesehenen Fensterrahmen 405 des Solardeckels 155. Eine Schutzscheibe 410 befindet sich gemäß diesem Ausführungsbeispiel unmittelbar vor dem Solarmodul 160 und ist optional wasser- und luftdicht im Fensterrahmen 405 eingeschweißt.

Das geöffnete Sendeeinheitsgehäuse 145 positioniert gemäß diesem Ausführungsbeispiel, an einer linken Seite eingeschoben, eine Platine 415, und gegenüberliegend, gemäß diesem Ausführungsbeispiel rechts eingeschoben, die Energiespeichereinrichtung in Form eines Akkumulators 420. Ein erster Stecker 425 verbindet gemäß diesem Ausführungsbeispiel das Solarmodul 160 mit der Platine 415. Eine Diode 430 verhindert gemäß diesem Ausführungsbeispiel einen Kurzschluss, falls eine Beschädigung des Solarmoduls 160 infolge von Fremdeinwirkung stattfinden sollte.

Eine Antennenspirale 435 schiebt sich gemäß diesem Ausführungsbeispiel in einen sich von dem Solardeckel 155 weg erstreckenden Antennenhut 440. Eine Nutausbildung 445 am Sendeeinheitsgehäuse 145 beherbergt gemäß diesem Ausführungsbeispiel die Dichtung 450, welche für eine zündquellensichere Schließung des Solardeckels 155 sorgt.

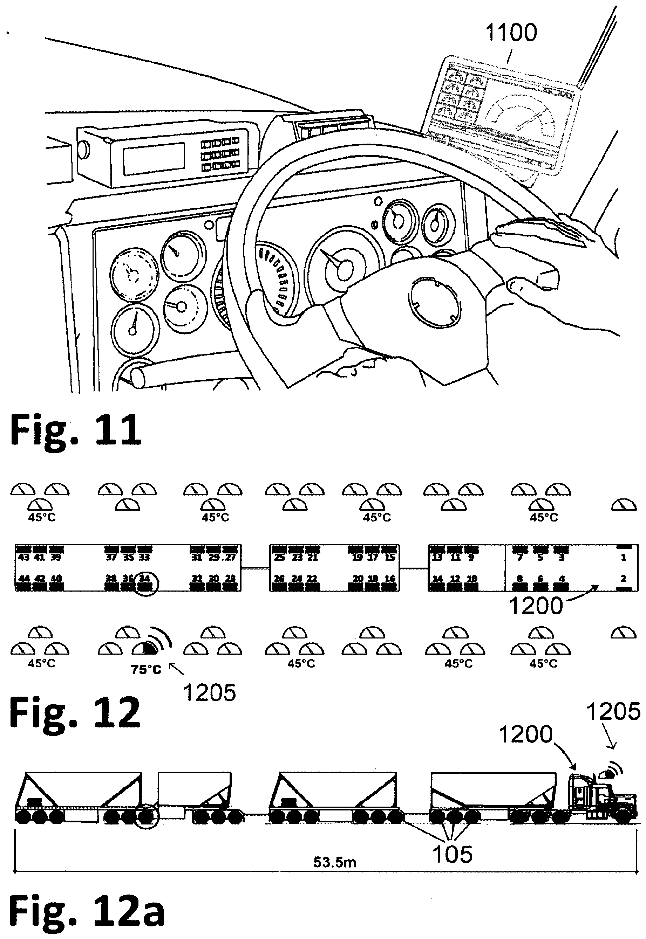

Eine Bezifferung 455, hier beispielhaft mit der Nummerierung "21", am Solardeckel 155 bezieht sich hier beispielhaft auf das Rad Nr. 21 am zweiten Anhänger linke Seite in Fig. 12. Gerade Zahlen beziehen sich gemäß einem Ausführungsbeispiel auf die Räder der rechten Seite eines Lastzuges, ungerade Zahlen auf die Räder der linken Seite. Über einen zweiten Stecker 460 und einen in Fig. 5 gezeigten vierten Stecker 500 wird der Akkumulator 420 an die Platine 415 angeschlossen. Ein dritter Stecker 465 verbindet das Verbindungskabel 140, das auch als "Sensorkabel" bezeichnet werden kann, mit der Platine 415. Über eine Linse 470 aus lichtleitendem Kunststoff am Solardeckel 155 kann ein kurzeitiges Aufleuchten einer in Fig. 5 gezeigten LED 530 auf der Platine 415 in einem definierten Zeitintervall, beispielsweise alle 120 Sekunden, beobachtet werden, und dient als Nachweis, dass die Messvorrichtung in Betrieb ist.

Um einen erhöhten Explosionsschutz zu erreichen, ist gemäß einem Ausführungsbeispiel eine Verkapselung des gesamten Innenhohlraums der Sendeeinheit 115 mit Vergussmasse realisiert. Die Verkapselungsmasse ist hierzu nach dem Zusammenbau der Sendeeinheit 115 über eines oder zwei nachzubohrende Löcher im Antennenhut 440 einspritzbar, falls ein erhöhter Explosionsschutz erforderlich ist.

Der gemäß diesem Ausführungsbeispiel in die Sendeeinheit 115 integrierte Akkumulator 420 dient mit Dauerladung durch die integrierte Solarzelle als unabhängige Stromquelle für den Dauereinsatz der während der Fahrt des Fahrzeugs in ständiger Rotation befindlichen Überwachungsvorrichtung, wobei gemäß diesem Ausführungsbeispiel die durchsichtige Schutzscheibe 410 das Solarmodul 160 vor mechanischer Beschädigung schützt, welches eine Voraussetzung für eine Explosionsschutz-Zertifizierung ist.

Fig. 4a zeigt eine perspektivische Darstellung einer Vorderseite einer geöffneten Sendeeinheit 115 gemäß einem Ausführungsbeispiel. Dabei kann es sich um die in Fig. 4 beschriebene Sendeeinheit 115 in montiertem Zustand handeln, wobei der Solardeckel zur besseren Darstellung eines Innenraums der Sendeeinheit 115 nicht dargestellt ist.

Fig. 5 zeigt eine perspektivische Explosionsdarstellung einer Rückseite einer Sendeeinheit 115 gemäß einem Ausführungsbeispiel. Dabei kann es sich um die in Fig. 4 beschriebene Sendeeinheit 115 handeln.

Mit dem zweiten Stecker 460 und einem vierten Stecker 500 wird der Akkumulator 420 gemäß diesem Ausführungsbeispiel an die Platine 415 angeschlossen. Der gemäß diesem Ausführungsbeispiel 3,2 Volt und 600mAh NiMH Akkumulator 420 ist über den Steckanschluss 505 in Form einer Ladebuchse schnell aufladbar, falls die Sendeeinheit 115 längere Zeit keiner Lichtquelle ausgesetzt war. An der Ladebuchse ist ferner der Ladezustand des Akkumulators 420 messbar. Eine Speicherkapazität des Akkumulators 420 hält gemäß einem Ausführungsbeispiel im Schlafmodus mehrere Monate. Sobald die Sendeeinheit 115 genügend Licht erhält, wird der Akkumulator 420 aufgeladen. Eine Schnellladung und Spannungsmessung ist über die Ladebuchse durchführbar.

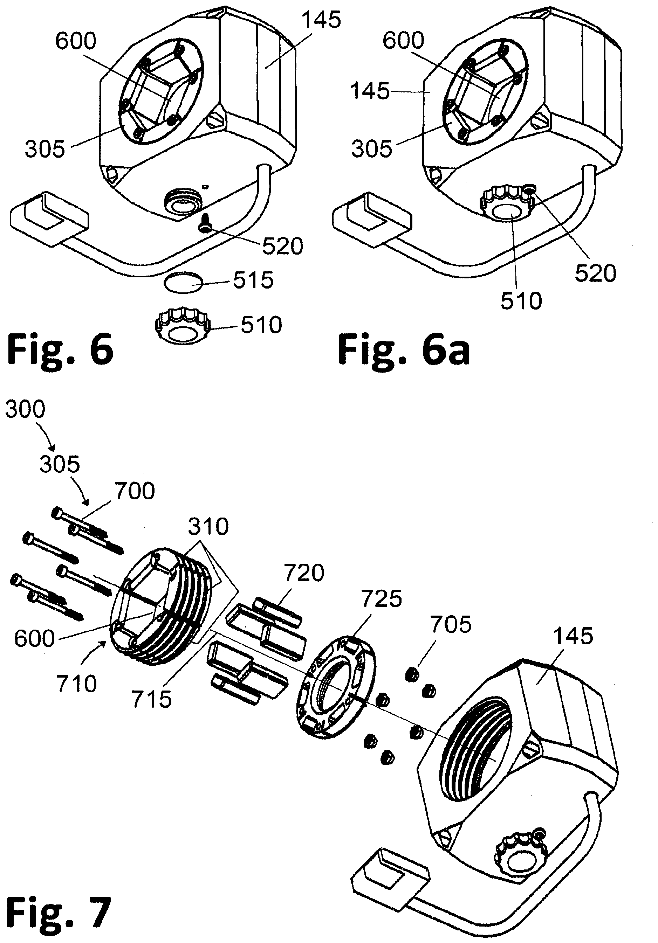

Eine schraubbare Verschlusskappe 510 schließt gemäß diesem Ausführungsbeispiel mittels einer eingebetteten Dichtungsscheibe 515 einen Zugang zur Ladebuchse gas- und/oder druckwasserdicht ab. Ein selbstständiges Lockern der Verschlusskappe 510 am Gewinde wird gemäß diesem Ausführungsbeispiel durch eine Sicherungsschraube 520 verhindert, deren Schraubenkopf sich zwischen Rippen der Verschlusskappe 510 eindreht, siehe hierzu auch Fig. 6a.

Sobald die Messvorrichtung wie in Fig. 1 gezeigt zusammengebaut ist, beginnt diese im Schlafmodus zu arbeiten. Die Messvorrichtung besitzt wegen des Explosionsschutzes keinen eigenen Schalter um den Stromkreislauf zu unterbrechen. Um während der Lagerung bzw. während des Versandes den Stromkreis zu unterbrechen, ist eine Hülse 525 in die Ladebuchse geschoben, welche den typischen stromkreisschließenden Federkontakt dieser handelsüblichen Buchsen unterbricht.

Ein Aufleuchten der LED 530 auf der Platine 415 kann gemäß diesem Ausführungsbeispiel in einem definierten Zeitintervall, beispielsweise alle 120 Sekunden, beobachtet werden, und dient als Nachweis, dass die Messvorrichtung in Betrieb ist.

Fig. 6 zeigt eine perspektivische Darstellung einer Rückseite einer Sendeeinheit 115 gemäß einem Ausführungsbeispiel. Dabei kann es sich um die in einer der vorangegangenen Figuren beschriebene Sendeeinheit 115 handeln.

Gezeigt ist das Sendeeinheitsgehäuse 145 der Sendeeinheit 115 mit der gemäß diesem Ausführungsbeispiel vollständig eingeschraubten Klemmeinrichtung 305. Ist die Klemmeinrichtung 305 vollständig eingeschraubt, ist eine maximale Klemmwirkung erreicht. Die Ausnehmung ist gemäß diesem Ausführungsbeispiel als eine Sechskantfassung 600, die auch als "sechskantförmige Lochaussparung" bezeichnet werden kann, realisiert. Die Sicherungsschraube 520, Dichtungsscheibe 515 und Verschlusskappe 510 sind gemäß diesem Ausführungsbeispiel in Explosionsdarstellung gezeigt.

Fig. 6a zeigt eine perspektivische Darstellung einer Rückseite einer Sendeeinheit 115 gemäß einem Ausführungsbeispiel. Dabei handelt es sich um die in Fig. 6 beschriebene Sendeeinheit 115, bei der die Sicherungsschraube 520, Dichtungsscheibe 515 und Verschlusskappe 510 in einem montierten Zustand angeordnet sind. Die Sicherungsschraube 520 verhindert im montierten Zustand ein Aufdrehen der Verschlusskappe 510 formschlüssig zwischen zwei Rippen der Verschlusskappe 510.

Fig. 7 zeigt eine perspektivische Explosionsdarstellung einer Befestigungseinrichtung 300 einer Sendeeinheit 115 gemäß einem Ausführungsbeispiel. Dabei kann es sich um die in Fig. 6a beschriebene Sendeeinheit 115 handeln.

Gezeigt ist die aus dem Sendeeinheitsgehäuse 145 entnommene Klemmeinrichtung 305 in ihren einzelnen Bestandteilen, welche mit sechs weiteren Schrauben 700 und deren Stoppmuttern 705 zusammengehalten werden. Ein zylinderförmiger Gewindeteil 710 weist die sechskantförmige zentrale Lochaussparung parallel zu einer Zylinderachse 715 auf, die der Schlüsselweite einer der in Fig. 1 und 2 gezeigten Radmuttern 200 entspricht.

Die zur jeweiligen Radmutterschlüsselweite der Radmuttern 200 passende, eingeschraubte Klemmeinrichtung 305 ist mit je einem weiteren Magneten 720 innerhalb jeder Klemmklaue 310 ausgestattet, hier beispielhaft insgesamt sechs Neodymium-Magnete bei sechs Klemmklauen 310. Ein Magnetkammerdeckel 725 verschließt die Magnetkammer in jeder der sechs Klemmklauen 310.

Die weiteren Magnete 720 verhindern, dass die Sendeeinheit 115 von der Radmutter abfällt, sollte die Klemmwirkung durch zusätzliches Drehen durch eine Person vergessen worden sein, was leicht in der Eile vorkommen kann, z. B. bei einem Anhängerwechsel. Die Magnetkraft alleine reicht vollkommen aus, die Sendeeinheit 115 auf der Radmutter während der Fahrt festzuhalten. Der Klemmmechanismus ist eine zusätzliche mechanische Sicherung und schützt gegebenenfalls auch gegen Diebstahl.

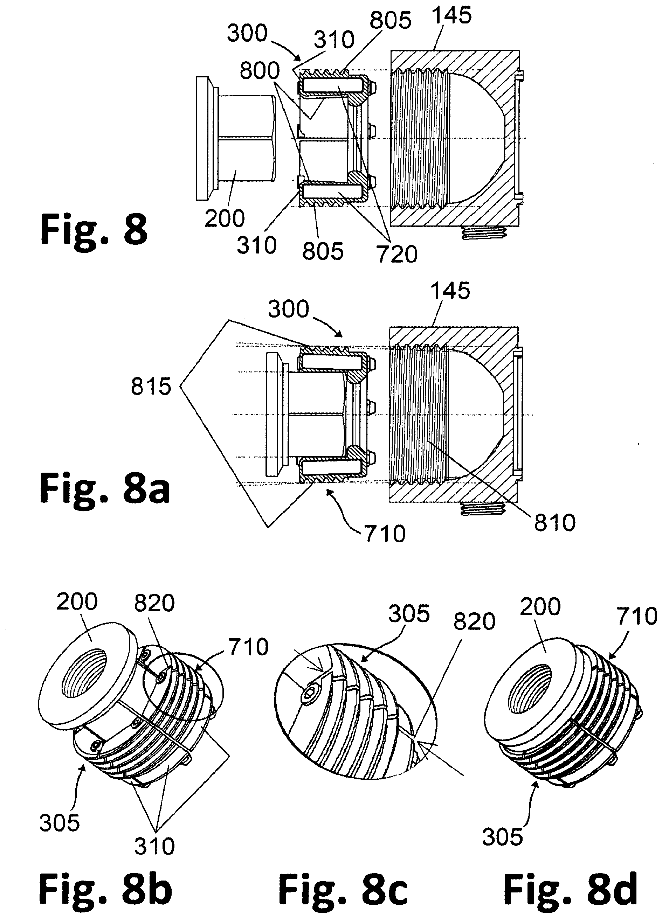

Fig. 8 zeigt eine seitliche Querschnittsdarstellung einer Befestigungseinrichtung 300 einer Sendeeinheit gemäß einem Ausführungsbeispiel. Dabei kann es sich um die in Fig. 7 beschriebene Befestigungseinrichtung 300 handeln.

Die Radmutter 200 ist gemäß diesem Ausführungsbeispiel außerhalb der Klemmklauen 310 dargestellt. Gemäß diesem Ausführungsbeispiel neigen sich flache Innenwände 800 der Klemmklauen 310 zur Zylinderachse. Dadurch verdickt sich die Wandstärke der Klemmklauen 310 in Richtung des Nabenflanschs.

Wird der zylinderförmige Gewindeteil 710 über die Radmutter 200 geschoben, werden die sechs Klemmklauen 310 auseinandergespreizt, um die Radmutter 200 zu umschließen. Die Klemmwirkung entsteht dadurch, dass ein zylindrisches Außengewinde 805 der Klemmklauen 310 durch das Aufschieben auf die Radmutter 200 infolge der Auseinanderspreizung konisch geformt wird, da sich die Innenwände 800 der Klemmklauen 310 den Sechskantflächen der Radmutter 200 anpassen. Das konische Außengewinde ist in Fig. 8a gezeigt.

Fig. 8a zeigt eine seitliche Querschnittsdarstellung einer Befestigungseinrichtung 300 einer Sendeeinheit gemäß einem Ausführungsbeispiel. Dabei kann es sich um die in Fig. 8 beschriebene Befestigungseinrichtung 300 handeln, bei der die Radmutter 200 in einem vollständig in die Klemmklauen eingeführten, also verklemmten Zustand dargestellt ist.

Wird das Sendeeinheitsgehäuse 145 mit seinem zylindrischen Innengewinde 810 auf das jetzt konische Außengewinde 815 aufgeschraubt, verengt sich die sechskantförmige Lochaussparung, welche in Fig. 6 gezeigt ist, zunehmend mit jeder Drehung. Der Druck der Flächen aufeinander wird schließlich so groß, dass ein Abziehen des Sendeeinheitsgehäuse 145 von der Radmutter 200 ohne ein Zurückdrehen unmöglich ist.

Fig. 8b zeigt eine perspektivische Darstellung einer Klemmeinrichtung 305 einer Sendeeinheit gemäß einem Ausführungsbeispiel. Dabei kann es sich um die in Fig. 8 oder 8a beschriebene Klemmeinrichtung 305 handeln.

Die Radmutter 200 ist in einem teilweise in die Klemmklauen 310 eingeführten Zustand dargestellt. Der Gewindeteil 710 ist an sechs Innenkanten durch Einschnitte 820 geschlitzt, so dass die sechs Klemmklauen 310 entstehen, die am eingeschraubten Ende miteinander verbunden bleiben.

Durch die gemäß diesem Ausführungsbeispiel einschraubbare, auswechselbare, zur Schlüsselweite der Radmutter 200 passende Klemmeinrichtung 305 wird gemäß diesem Ausführungsbeispiel ein Schnellanbringen und ein Schnellabnehmen der Sendeeinheit erreicht, wobei die Klemmeinrichtung 305 gemäß einem Ausführungsbeispiel im verklemmten Zustand eine primäre magnetische Klemmhaftung auf die Radmutter 200 ausübt und infolge einer gewindeverspannenden Drehbewegung am Sendeeinheitsgehäuse, siehe hierzu auch Fig. 2, eine sekundäre mechanische Klemmwirkung erzeugt, welche schon die bereits zur Halterung ausreichende magnetische Klemmkraft noch zusätzlich verstärkt und gleichzeitig sichert.

Fig. 8c zeigt eine perspektivische Darstellung eines Ausschnitts einer Klemmeinrichtung 305 gemäß einem Ausführungsbeispiel. Dabei kann es sich um einen Ausschnitt der in Fig. 8b beschriebenen Klemmeinrichtung 305 handeln, welcher einen der Einschnitte 820 näher zeigt.

Fig. 8d zeigt eine perspektivische Darstellung einer Klemmeinrichtung 305 einer Sendeeinheit gemäß einem Ausführungsbeispiel. Dabei kann es sich um die in Fig. 8b beschriebene Klemmeinrichtung 305 handeln, wobei die Radmutter 200 in einem vollständig in die Klemmklauen eingeführten, also verklemmten Zustand dargestellt ist.

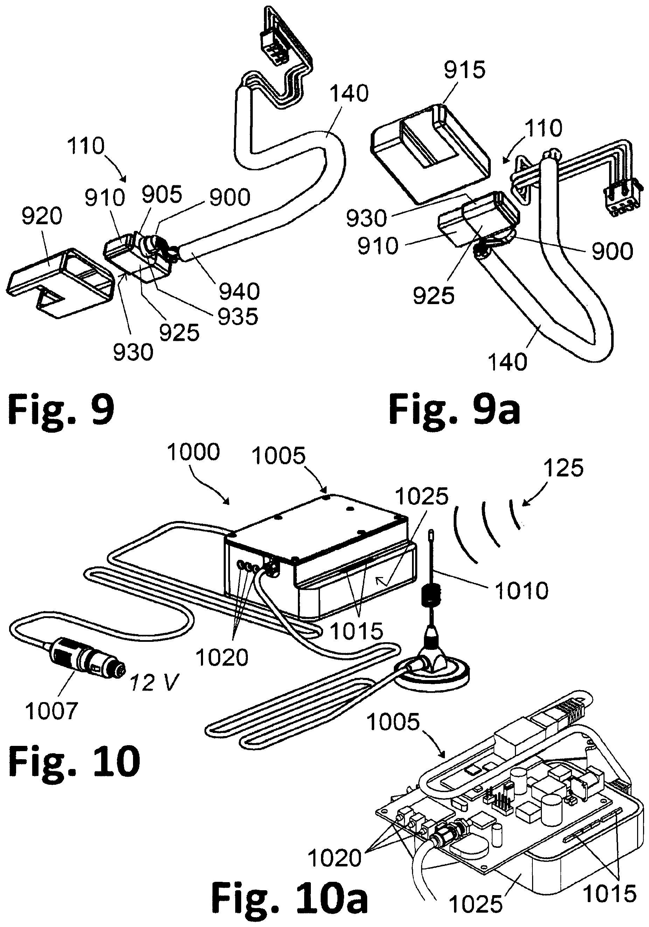

Fig. 9 zeigt eine perspektivische Darstellung einer Sensoreinheit 110 einer Überwachungsvorrichtung gemäß einem Ausführungsbeispiel. Dabei kann es sich um die in Fig. 1, 4 oder 5 beschriebene Sensoreinheit 110 handeln.

Die Sensoreinheit 110 ist gemäß diesem Ausführungsbeispiel als eine Temperatursonde ausgeformt, die dazu ausgebildet ist, um als den physikalischen Parameter eine Temperatur zu sensieren und/oder weist gemäß einem alternativen Ausführungsbeispiel einen Drucksensor auf, um als den physikalischen Parameter einen Reifendruck zu sensieren.

Die Temperatursonde umfasst gemäß diesem Ausführungsbeispiel einen programmierbaren Temperatursensor 900, ein kupfernes Winkelblech 905, den Magnet 910 in Form eines Neodymium-Magnets, ein Sensorgehäuse 915 und/oder eine Vergussmasse 920. Das Sensorgehäuse 915 ist gemäß diesem Ausführungsbeispiel mit einer Lochaussparung ausgebildet, die in Fig. 1 zu sehen ist. Durch die Lochaussparung kann ein optionaler Kabelbinder gezogen werden.

Die Temperaturabtastung erfolgt über das kupferne Winkelblech 905, welches gemäß diesem Ausführungsbeispiel über eine oder beide von zwei 90 Grad zueinander abgewinkelten Oberflächen 925, 930 die Hitze aufnimmt und an den Temperatursensor 900 weiterleitet. Der Temperatursensor 900 wird gemäß diesem Ausführungsbeispiel von einer Ösenausbildung 935 des Winkelbleches 905 umschlossen und ist einschließlich eines Kabelendes 940 des Verbindungskabels 140 zusammen mit dem Neodymium-Magnet 910 in das Sensorgehäuse 915 mit der Vergussmasse 920 eingegossenen.

Fig. 9a zeigt eine perspektivische Darstellung einer Sensoreinheit 110 gemäß einem Ausführungsbeispiel. Dabei kann es sich um die in Fig. 9 beschriebene Sensoreinheit 110 handeln, welche um 90° im Uhrzeigersinn gedreht dargestellt ist.

Fig. 10 zeigt eine perspektivische Darstellung eines Ausführungsbeispiels einer Warneinrichtung 1000 für ein Fahrzeug. Dabei kann es sich um die in Fig. 1 beschriebene Warneinrichtung 1000 handeln.

Die Warneinrichtung 1000 ist ausgebildet, um das Sensorsignal einer der in einer der vorangegangenen Figuren beschriebenen Überwachungsvorrichtungen einzulesen und unter Verwendung des Sensorsignals eine optische, akustische und/oder haptische Ausgabe des physikalischen Parameters auf einer beispielsweise in Fig. 11 gezeigten Ausgabeeinheit zu bewirken.

Die Warneinrichtung 1000 ist ferner gemäß diesem Ausführungsbeispiel dazu ausgebildet, um ein Warnsignal zu erzeugen, wenn der physikalische Parameter einen definierten Schwellenwert erreicht oder überschreitet. Der definierte Schwellenwert repräsentiert gemäß einem Ausführungsbeispiel eine Maximaltemperatur von beispielsweise 75°C an der Radnabe. Das Warnsignal ist gemäß einem Ausführungsbeispiel dazu ausgebildet, um eine akustisch, optisch und/oder haptisch wahrnehmbare Warnung für eine Person auf beispielsweise der Ausgabeeinheit zu bewirken. Ferner ist die Warneinrichtung 1000 gemäß einem Ausführungsbeispiel dazu ausgebildet, um ein weiteres Warnsignal zu erzeugen, wenn die Ladezustandsinformation einen definierten Ladezustandsschwellenwert erreicht oder unterschreitet, wobei der definierte Ladezustandsschwellenwert gemäß einem Ausführungsbeispiel einen niedrigen oder ladebedürftigen Akkustand von beispielsweise 20 Prozent der Ladekapazität der Energiespeichereinrichtung repräsentiert.

Ein System aus der Warneinrichtung 1000 und der Überwachungsvorrichtung kann auch als ein Warnsystem bezeichnet werden.

Die Warneinrichtung 1000 weist gemäß diesem Ausführungsbeispiel eine Basisstation 1005, einen Basisstationsstecker 1007 und/oder eine weitere Antenne 1010 auf.

Sobald die Basisstation 1005 einen 12 V-Fahrzeugstrom aus der Kfz-Steckdose von der Autobatterie erhält und der Fahrer die Ausgabeeinheit, beispielsweise in Form eines in Fig. 11 gezeigten Tablets, eingeschaltet hat, fängt das Warnsystem an zu arbeiten, gemäß diesem Ausführungsbeispiel erkennbar am Aufleuchten von weiteren LEDs 1015 und/oder zusätzlichen LEDs 1020. Die Software der Basisstation 1005 ist gemäß diesem Ausführungsbeispiel nach etwa zwei Minuten hochgefahren, gleichzeitig findet gemäß diesem Ausführungsbeispiel die Initialisierung eines Modems 1025 im Inneren der Basisstation 1005 statt und verbindet sich gemäß diesem Ausführungsbeispiel mit der Ausgabeeinheit über WiFi.

Wird die Basisstation 1005 in der Fahrerkabine ausgeschaltet durch ein Herausziehen des Basisstationssteckers 1007, hier in Form eines 12 Volt-Universalsteckers, fallen die Sendeeinheiten an allen, beispielsweise in den Figuren 2 und 12 gezeigten, Rädern in einen Schlafmodus. Der Funkkontakt aller Sendeeinheiten über deren Antennen mit der weiteren Antenne 1010, welche beispielsweise am Dach des Führerhauses angeordnet ist, ist dann eingestellt. Sobald der Basisstationsstecker 1007 wieder in die 12 Volt Fahrzeugsteckdose eingeführt wird, fährt das Warnsystem hoch.

Es folgt eine Beschreibung einer beispielhaften Funktionsweise des Warnsystems:
Gemäß einem Ausführungsbeispiel senden in vorprogrammierten Zeitintervallen, beispielsweise alle 2 Minuten, alle Sendeeinheiten der Überwachungsvorrichtung gleichzeitig die augenblickliche Temperatur an die Basisstation 1005 über deren Antennen an die weitere Antenne 1010. Die Messung wird gemäß diesem Ausführungsbeispiel auf Anfrage der Basisstation 1005 im vorprogrammierten Default-Zeitintervall von zwei Minuten von der in Fig. 9 beschriebenen Temperatursonde ausgeführt, welche durch Magnetkraft an einer hitzekritischen Wärmestelle auf der Radnabe haftet. Das Modem 1025 in der Basisstation 1005 sendet diese Daten weiter an die Ausgabeeinheit. Die Software verarbeitet die Daten und bringt diese grafisch und in verschiedenen, leicht verständlichen Auswertungsdarstellungen auf der Ausgabeeinheit, beispielsweise auf einem Bildschirm des Tablets.

Übersteigt die gemessene Temperatur irgendeiner der Messvorrichtungen den vorprogrammierten zulässigen Wert von beispielsweise 75°C, wird ein erster akustischer Alarm ausgelöst und auf dem Bildschirm erscheint das alarmauslösende Rad und/oder dessen gemessene Daten. Der Fahrer hat jetzt genügend Zeit, das Fahrzeug an einer sicheren Stelle anzuhalten und nachzuschauen. Erhitzt sich das Rad aber rasch weiter, setzt gemäß einem Ausführungsbeispiel ein zweiter aggressiver akustischer Alarm ein und zwar bei beispielsweise 85°C Defaulttemperatur. Ein Anhalten ist ab diesen Zeitpunkt dringend notwendig.

Die Software speichert gemäß einem Ausführungsbeispiel sämtliche Messwerte, welche zurückreichen bis in die längere Vergangenheit und erstellt ein Messwerteprofil über diesen Zeitraum von jedem einzelnen Rad. Für die Wartung der Radlager sind diese gespeicherten Daten von Vorteil. Die Messvorrichtungen erkennen gemäß einem Ausführungsbeispiel nicht nur einen Temperaturanstieg, welcher von der Nabe kommt, sondern auch einen Temperaturanstieg, der von der Felge verursacht wird, z. B. von einem Reifen mit zu geringem Reifendruck. Bei den Lenkachsenrädern ist das Platzen eines Reifens besonders gefährlich und kündigt sich durch Erwärmung des Reifenmaterials an. Bei Lenkachsenrädern empfiehlt es sich daher, den Alarmauslösewert niedrig zu programmieren.

Befindet sich das AFWS in einem von Mobilfunk erfassten Gebiet, sind alle augenblicklichen, sowie historischen AFWS-Daten gemäß einem Ausführungsbeispiel über das Internet durch Einloggen in die Software geografisch von überall zugänglich.

Die Basisstation 1005 ist also zusammengefasst gemäß diesem Ausführungsbeispiel dazu ausgebildet, um die empfangenen physikalischen Parameter an einen handelsüblichen Tablet-Bildschirm weiterzuleiten, welcher dem Fahrer den Temperaturzustand der Räder leicht verständlich übermittelt, ihn rechtzeitig auf eine bevorstehende Brandgefahr akustisch, visuell und/oder haptisch warnt und/oder ihn auf das Rad hinweist, von dem ein Reifenfeuer droht.

Fig. 10a zeigt eine perspektivische Darstellung einer Basisstation 1005 einer Warneinrichtung gemäß einem Ausführungsbeispiel. Gezeigt ist gemäß diesem Ausführungsbeispiel ein Innenraum der in Fig. 10 beschriebenen Basisstation 1005.

Fig. 11 zeigt eine Ausgabeeinheit 1100 zur Verwendung mit einem Warnsystem gemäß einem Ausführungsbeispiel. Dabei kann es sich um das in Fig. 10 beschriebene Warnsystem handeln. Die Ausgabeeinheit 1100 ist gemäß diesem Ausführungsbeispiel in einer Fahrerkabine des Fahrzeugs, benachbart zu einem Fahrzeugführer des Fahrzeugs, angeordnet. Die Ausgabeeinheit 1100 ist gemäß einem Ausführungsbeispiel Teil des Warnsystems oder gemäß einem alternativen Ausführungsbeispiel als eine in dem Fahrzeug bereits vorhandene Kommunikationseinrichtung ausgeformt.

Die Ausgabeeinheit 1100 weist gemäß diesem Ausführungsbeispiel ein Display, Lautsprecher und/oder bewegliches Gerät, beispielsweise ein vibrationsfähiges Gerät, auf. Gemäß diesem Ausführungsbeispiel zeigt die Ausgabeeinheit 1100 unter Verwendung einer Mehrzahl von Sensorsignalen eine Mehrzahl von Temperaturen für eine Mehrzahl von je mit Messvorrichtungen bestückten Rädern des Fahrzeugs an.

Gemäß einem alternativen Ausführungsbeispiel wird unter Verwendung der Sensorsignale ferner ein momentaner Ladezustand jedes einzelnen Akkumulators der Überwachungsvorrichtung auf der Ausgabeeinheit 1100 angezeigt und/oder es ertönt ein akustisches Signal und/oder erscheint ein optisches Signal, wenn der Ladezustand eines Akkumulators bedenklich wird, beispielsweise lediglich noch 20 Prozent seiner Ladekapazität oder weniger aufweist.

Anders ausgedrückt zeigt Fig. 11 eine rechtsgesteuerte Road-Train Fahrerkabine mit Ausgabeeinheit 1100 in Form eines AFWS-Tabletbildschirms.

Fig. 12 zeigt eine schematische Aufsicht auf ein Fahrzeug 1200 mit einer Überwachungsvorrichtung gemäß einem Ausführungsbeispiel. Dabei kann es sich um die in einer der vorangegangenen Figuren beschriebene Überwachungsvorrichtung handeln.

Gemäß diesem Ausführungsbeispiel weist die Überwachungsvorrichtung zumindest eine zweite Messvorrichtung mit einer zweiten Sensoreinheit auf, die dazu ausgebildet ist, um in einer Koppelstellung an einem ersten Abschnitt einer Radnabe eines zweiten Rads des Fahrzeugs 1200 während einer Fahrt des Fahrzeugs 1200 einen zweiten physikalischen Parameter im Bereich des zweiten Rads zu sensieren, und mit einer zweiten Sendeeinheit, die eine zweite Befestigungseinrichtung aufweist, die ausgeformt ist, um die zweite Sendeeinheit in einer Befestigungsstellung an einem zweiten Abschnitt der Radnabe oder einer zweiten Radfelge des zweiten Rads zu befestigen, aufweisen, wobei die zweite Sendeeinheit ausgebildet ist, um ein den zweiten physikalischen Parameter repräsentierendes zweites Sensorsignal drahtlos an die Warneinrichtung zu senden, um eine Überwachung des zweiten physikalischen Parameters zu ermöglichen. Die Überwachungsvorrichtung weist gemäß diesem Ausführungsbeispiel an jeder von hier beispielhaft 44 Radnaben von 44 Rädern eine weitere derartige Messvorrichtung auf.

Anders ausgedrückt zeigt Fig. 12 einen Road-Train mit Warnvorrichtungsplatzierungen. Das Fahrzeug 1200 ist gemäß diesem Ausführungsbeispiel als ein typischer 53,5 Meter langer Road-Train für Ammoniumnitrat, Gefahrengut der Transportklasse 5.1, bestehend aus sechs Fahrzeugteilen mit durchgehender Nummerierung von 44 Rädern ausgeformt, wobei das rechtsseitige Rad Nr. 34 am vorletzten Anhänger gemäß diesem Ausführungsbeispiel durch plötzliche Erwärmung von normalen 45°C auf 75°C bei der Warneinrichtung gerade das Warnsignal 1205 in Form eines ersten Default-Alarms in der Fahrerkabine auslöst. Gemäß einem Ausführungsbeispiel wird bei einer Erwärmung auf 85°C ein zweites Warnsignal in Form eines zweiten Default-Alarms in der Fahrerkabine auslöst, das als eine noch dringlichere Alarmstufe signalisiert wird.

Fig. 12a zeigt eine schematische Seitenansicht eines Fahrzeugs 1200 mit einer Überwachungsvorrichtung gemäß einem Ausführungsbeispiel. Dabei kann es sich um das in Fig. 12 beschriebene Fahrzeug 1200 handeln.

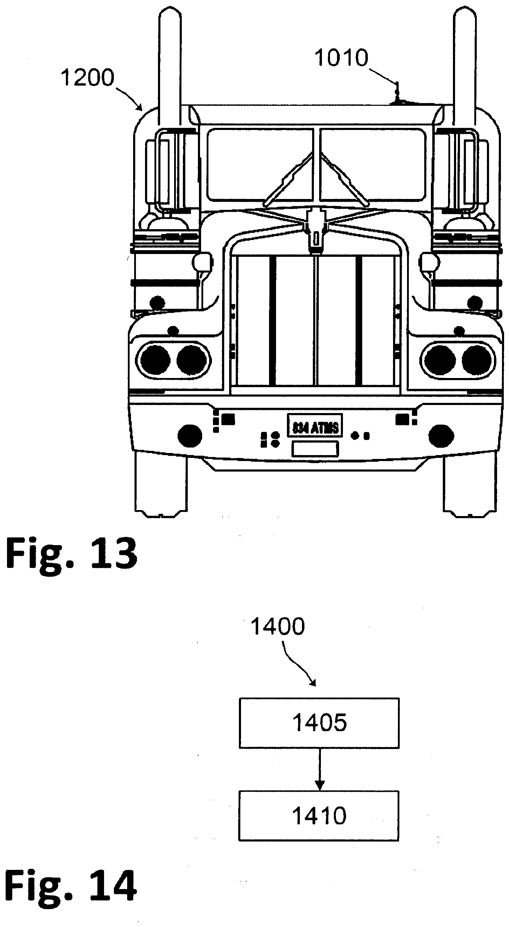

Fig. 13 zeigt eine schematische Darstellung eines Fahrzeug 1200 mit einem Warnsystem gemäß einem Ausführungsbeispiel. Dabei kann es sich um das in Fig. 10 beschriebene Warnsystem handeln. Das Fahrzeug 1200 ist in Frontansicht dargestellt.

Die weitere Antenne 1010 ist gemäß diesem Ausführungsbeispiel auf einem Dach des Fahrzeugs 1200 positioniert, das gemäß diesem Ausführungsbeispiel als ein Road-Train-Zugfahrzeug ausgebildet ist.

Fig. 14 zeigt ein Ablaufdiagramm eines Verfahrens 1400 gemäß einem Ausführungsbeispiel zum Betreiben einer Überwachungsvorrichtung. Dabei kann es sich um eine der in einer der vorangegangenen Figuren beschriebenen Überwachungsvorrichtungen handeln.

Das Verfahren 1400 umfasst einen Schritt 1405 des Sensierens und einen Schritt 1410 des Sendens. Im Schritt 1405 des Sensierens wird der physikalische Parameter im Bereich des Rads unter Verwendung der Sensoreinheit in der Koppelstellung an dem ersten Abschnitt der Radnabe des Rads des Fahrzeugs während der Fahrt des Fahrzeugs sensiert. Im Schritt 1410 des Sendens wird ein den physikalischen Parameter repräsentierendes Sensorsignal an die Warneinrichtung unter Verwendung der Sendeeinheit gesendet, die mittels der Befestigungseinrichtung in der Befestigungsstellung an dem zweiten Abschnitt der Radnabe oder der Radfelge des Rads befestigt ist, um die Überwachung des physikalischen Parameters zu ermöglichen.

Die hier vorgestellten Verfahrensschritte können wiederholt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichenliste

- 100: Überwachungsvorrichtung
- 105: Messvorrichtung
- 110: Sensoreinheit
- 115: Sendeeinheit
- 120: Radnabe
- 122: Radfelge
- 125: Sensorsignal
- 130: Nabenhülse
- 135: Nabenflansch
- 140: flexibles Verbindungskabel
- 145: Sendeeinheitsgehäuse
- 150: Schraube
- 152: Gehäusemutter
- 155: Solardeckel
- 160: Solarmodul

- 200: Radmutter
- 205: Pfeil
- 210: Radmutter-Indikator

- 300: Befestigungseinrichtung
- 305: Klemmeinrichtung
- 310: Klemmklaue

- 400: Schneidschraube
- 405: Fensterrahmen
- 410: Schutzscheibe
- 415: Platine
- 420: Akkumulator
- 425: erster Stecker
- 430: Diode
- 435: Antennenspirale
- 440: Antennenhut
- 445: Nutausbildung
- 450: Dichtung
- 455: Bezifferung
- 460: zweiter Stecker
- 465: dritter Stecker
- 470: Linse

- 500: vierter Stecker
- 505: Steckanschluss
- 510: Verschlusskappe
- 515: Dichtungsscheibe
- 520: Sicherungsschraube
- 525: Hülse
- 530: LED

- 600: Sechskantfassung

- 700: weitere Schraube
- 705: Stoppmutter
- 710: Gewindeteil
- 715: Zylinderachse
- 720: weiterer Magnet
- 725: Magnetkammerdeckel

- 800: Innenwand
- 805: zylindrisches Außengewinde
- 810: zylindrisches Innengewinde
- 815: konisches Außengewinde
- 820: Einschnitt

- 900: Temperatursensor
- 905: Winkelblech
- 910: Magnet
- 915: Sensorgehäuse
- 920: Vergussmasse
- 925: Oberfläche horizontal
- 930: weitere Oberfläche vertikal
- 935: Ösenausbildung
- 940: Kabelende

- 1000: Warneinrichtung
- 1005: Basisstation
- 1010: weitere Antenne
- 1015: weitere LED
- 1020: zusätzliche LED
- 1025: Modem

- 1100: Ausgabeeinheit

- 1200: Fahrzeug
- 1205: Warnsignal

- 1400: Verfahren zum Betreiben einer Überwachungsvorrichtung
- 1405: Schritt des Sensierens
- 1410: Schritt des Sendens

## Patentansprüche

1. **Überwachungsvomchtung (100) für ein Fahrzeug (1200), wobei die** Überwachungsvorrichtung (100) zumindest eine Messvorrichtung (105) mit den **folgenden Merkmalen aufweist**
einer Sensoreinheit (110), die dazu ausgebildet ist, um in einer Koppelstellung an **einem ersten Abschnitt einer Radnabe (120) eines Rads des Fahrzeugs (1200) während einer Fahrt des Fahrzeugs (1200) einen physikalischen Parameter im** Bereich des Rads zu sensieren, und
**einer Sendeeinheit (115), die eine Befestigungseinrichtung (300) aufweist, die** ausgeformt ist, um die Sendeeinheit (115) in einer Befestigungsstellung an einem **zweiten Abschnitt der Radnabe (120) des Rads oder einer Radfelge (122) zu befestigen, wobei die Sendeeinheit (115) ausgebildet ist, um ein den** physikalischen Parameter repräsentierendes Sensorsignal (125) drahtlos an eine **Wameinrichtung (1000) zu senden, um eine Überwachung des physikalischen Parameters zu ermöglichen,**
wobei die Überwachungsvorrichtung weiterhin mindestens eines oder beide der nachfolgenden Merkmale a), b) aufweist:
a) zumindest ein Bereich der Befestigungseinrichtung (300) ist magnetisch ausgeformt, um die Sendeeinheit (115) magnetisch an dem zweiten Abschnitt oder an der Radfelge (122) oder einer Radmutter (200) zu befestigen,
b) die Sensoreinheit (110) weist zumindest einen Magneten (910) auf, der dazu ausgebildet ist, um die Sensoreinheit (110) magnetisch an der Radnabe (120) des Rads zu koppeln,
**dadurch gekennzeichnet, dass**
**der zumindest** eine **Bereich der Befestigungseinrichtung (300) eine Klemmeinrichtung (305) aufweist, die dazu ausgebildet ist, um die Sendeeinheit** (115) an den zweiten Abschnitt der Radnabe (120) des Rads, an die Radfelge (122) oder an die Radmutter (200) zu klemmen,
**wobei die Sendeeinheit (115) und die Sensoreinheit (110) in unterschiedlichen Gehäusen** (145; 915) angeordnet **sind und über ein flexibles Verbindungskabel** (140) zur Übertragung des physikalischen Parameters miteinanader verbunden **sind.**

2. Überwachungsvorrichtung (100) gemäß Anspruch 1, bei der die **Befestigungseinrichtung (300) eine Ausnehmung aufweist, die zum formschlüssigen Befestigen der Sendeeinheit (115) an einer Radmutter (200) der** Radnabe (120) des Rads ausgeformt ist.

3. **Überwachungsvorrichtung (100) gemäß einem der vorangegangenen Ansprüche,** bei der die Sendeeinheit (115) ausgebildet ist, um das Sensorsignal (125) mit **einer Sendeleistung von mehr als 100 mW an die Warneinrichtung (1000) zu senden und/oder einen Repeater aufweist, um das Sensorsignal (125) zu** verstärken und/oder ein zweites Sensorsignal weiterzuleiten.

4. **Überwachungsvorrichtung (100) gemäß einem der vorangegangenen Ansprüche,** bei der die Sendeeinheit (115) ausgebildet ist, um das Sensorsignal (125) zu **senden, das eine Identifikationsinformation umfasst, die eine Identifikation der Messvorrichtung (105) von einer anderen Messvorrichtung ermöglicht, und/oder** das eine Ladezustandsinformation einer Energiespeichereinrichtung der **Messvorrichtung (105) umfasst,**
**wobei die Sendeeinheit (115) und/oder die Sensoreinheit (110) in einem gasdichten** und/oder explosionsgeschützten Gehäuse (145; 915) angeordnet ist.

5. **Überwachungsvorrichtung (100) gemäß einem der vorangegangenen Ansprüche,** bei der die Messvorrichtung (105) ein Solarmodul (160) aufweist, das dazu ausgebildet ist, um eine Energiespeichereinrichtung der Messvorrichtung (105) **mittels Solarenergie aufzuladen, um eine Versorgungsenergie zum Betreiben der Messvorrichtung (105) bereitzustellen, und/oder einen Steckanschluss (505) zum** externen Aufladen der Energiespeichereinrichtung aufweist.

6. **Überwachungsvorrichtung (100) gemäß Anspruch einem der vorangegangenen** Ansprüche, bei der die Sensoreinheit (110) eine Temperatursonde (900) auf, die dazu ausgebildet ist, um als den physikalischen Parameter eine Temperatur zu sensieren und/oder bei der die Sensoreinheit (110) einen Drucksensor aufweist, um als den physikalischen Parameter einen Reifendruck zu sensieren.

7. Warnsystem, umfassend eine Überwachungsvorrichtung (100) für ein Fahrzeug gemäß einem der Ansprüche 1 bis 6 und einer Warneinrichtung (1000) für ein Fahrzeug.

8. Warnsystem, gemäß Anspruch 7, wobei die Warneinrichtung (1000) ausgebildet ist, um das Sensorsignal (125) einer Überwachungseinrichtung (100) einzulesen und unter Verwendung des Sensorsignals (125) eine optische, akustische und/oder haptische Ausgabe des physikalischen Parameters auf einer Ausgabeeinheit (1100) zu bewirken.

9. **Warnsystem gemäß Anspruch** 8, bei dem die Warneinrichtung (1000) ausgebildet ist, um ein Warnsignal (1200) zu erzeugen, wenn der physikalische Parameter einen definierten Schwellenwert erreicht oder überschreitet.

10. Verfahren (1400) zum Betreiben einer Überwachungsvorrichtung (100) gemäß einem der Ansprüche 1 bis 6, wobei das Verfahren (1400) die folgenden Schritte umfasst:
Sensieren (1405) des physikalischen Parameters im Bereich des Rads unter Verwendung der Sensoreinheit (110) in der Koppelstellung an dem ersten Abschnitt der Radnabe (120) des Rads des Fahrzeugs (1200) während der Fahrt des Fahrzeugs (1200); und
Senden (1410) des den physikalischen Parameter repräsentierenden Sensorsignals (125) an die Warneinrichtung (1000) unter Verwendung der Sendeeinheit (115),
die mittels der Befestigungseinrichtung (300) in der Befestigungsstellung an dem zweiten Abschnitt der Radnabe (120) oder der Radfelge (122) des Rads befestigt ist, um die Überwachung des physikalischen Parameters zu ermöglichen.

## Claims

1. Monitoring facility (100) for a vehicle (1200), wherein the monitoring facility (100) has at least one measuring device (105) with the following features:
- a sensor unit (110) which is designed to be in a coupling position on a first location of a wheel hub (120) of a wheel of the vehicle (1200) while driving the vehicle (1200) to sense a physical parameter in the area of the wheel, and
- a transmitter unit (115) which has a fastening device (300) which is shaped to hold the transmitter unit (115) in a fastening position on a the second location of the wheel hub (120) of the wheel or a wheel rim (122), the transmitting unit (115) being designed to wirelessly send a sensor signal (125) representing the physical parameter to a warning device (1000) in order to monitor the physical parameter, wherein the monitoring facility further has at least one or both of the following features a), b):
a) at least a region of the fastening device (300) is magnetically shaped in order to magnetically fasten the transmitting unit (115) to the second location or to the wheel rim (122) or a wheel nut (200).
b) the sensor unit (110) has at least one magnet (910), which is designed to magnetically couple the sensor unit (110) to the wheel hub (120) of the wheel,
**characterized in that** at least a region of the fastening unit (300) has a clamping device (305) which is designed to attach the transmitting unit (115) to the second location of the wheel hub (120) of the wheel, to the wheel rim (122) or to clamp to the wheel nut (200), the transmitting unit (115) and the sensor unit (110) being arranged in different housings (145; 915) and being connected to one another via a flexible connecting cable (140) for transmitting the physical parameter.

2. Monitoring facility (100) according to claim 1, in which the fastening device (300) has a recess which is formed for positively fastening the transmitting unit (115) to a wheel nut (200) of the wheel hub (120) of the wheel.

3. Monitoring facility (100) according to one of the preceding claims, the transmitting unit (115) is designed to send the sensor signal (125) with a transmission power of more than 100 mW to the warning device (1000) and/or has a repeater to amplify the sensor signal (125) and/or to forward the second sensor signal.

4. Monitoring facility (100) according to one of the preceding claims, in which the transmitting unit (115) is designed to send the sensor signal (125), which includes identification information that identifies the measuring device (105).
made possible by another measuring device, and/or which comprises charge status information of an energy storage device of the measuring device (105), wherein the transmitting unit (115) and/or the sensor unit (110) is arranged in a gas-tight and/or explosion-proof housing (145; 915).

5. Monitoring facility (100) according to one of the preceding claims, in which the measuring device (105) has a solar module (160) which is designed to
to charge an energy storage device of the measuring device (105) utilizing solar energy in order to provide supply energy for operating the measuring device (105), and/or has a plug-in connection (505) for externally charging the energy storage device.

6. Monitoring facility (100) according to claim one of the preceding claims, in which the sensor unit (110) has a temperature probe (900) which is designed to sense a temperature as the physical parameter and / or in which the sensor unit (110) has a pressure sensor in order to sense a pressure as the physical parameter sensing tire pressure.

7. Warning system, comprising a monitoring facility (100) for a vehicle according to one of claims 1 to 6 and a warning device (1000) for a vehicle.

8. Warning system according to claim 7, wherein the warning device (1000) is designed to read the sensor signal (125) of a monitoring facility (100) and, using the sensor signal (125), to record an optical, acoustic and / or haptic output of the physical parameter an output unit (1100).

9. Warning system according to claim 8, in which the warning device (1000) is designed to generate a warning signal (1200) when the physical parameter reaches or exceeds a defined threshold value.

10. Method (1400) for operating a monitoring facility (100) according to one of claims 1 to 6, wherein the method (1400) comprises the following steps:
Sensing (1405) the physical parameter in the area of the wheel using the sensor unit (110) in the coupling position on the first location of the wheel hub (120) of the wheel of the vehicle (1200) while the vehicle (1200) is traveling; and sending (1410) the sensor signal (125) representing the physical parameter to the warning device (1000) using the transmitting unit (115), which is in the fastening position on the second location of the wheel hub (120) or the wheel rim by means of the fastening device (300). (122) of the wheel is attached to enable monitoring of the physical parameter.

## Revendications

1. Installation de surveillance (100) pour un véhicule (1200), dans laquelle l'installation de surveillance (100) comporte au moins un dispositif de mesure (105) présentant les caractéristiques suivantes :
- une unité de capteur (110) qui est conçue pour être dans une position d'accouplement sur un premier emplacement d'un moyeu de roue (120) d'une roue du véhicule (1200) pendant la conduite du véhicule (1200) pour détecter un paramètre physique dans le zone de la roue, et
- une unité émettrice (115) qui comporte un dispositif de fixation (300) qui est conformé pour maintenir l'unité émettrice (115) dans une position de fixation sur le deuxième emplacement du moyeu de roue (120) de la roue ou d'une jante ( 122), l'unité de transmission (115) étant conçue pour envoyer sans fil un signal de capteur (125) représentant le paramètre physique à un dispositif d'avertissement (1000) afin de surveiller le paramètre physique, l'installation de surveillance comportant en outre au moins un ou les deux des caractéristiques suivantes a), b) :
a) au moins une zone du dispositif de fixation (300) est façonnée magnétiquement pour fixer magnétiquement l'unité de transmission (115) au deuxième emplacement ou à la jante (122) ou à un écrou de roue (200).
b) l'unité de capteur (110) présente au moins un aimant (910) qui est conçu pour coupler magnétiquement l'unité de capteur (110) au moyeu (120) de la roue,
**caractérisé en ce qu'**au moins une zone de l'unité de fixation (300) présente un dispositif de serrage (305) qui est conçu pour fixer l'unité de transmission (115) au deuxième emplacement du moyeu de roue (120) de la roue, sur la roue jante (122) ou à serrer sur l'écrou de roue (200), l'unité de transmission (115) et l'unité de capteur (110) étant disposées dans des boîtiers différents (145 ; 915) et étant reliées l'une à l'autre via un câble de liaison flexible ( 140) pour transmettre le paramètre physique.

2. Installation de surveillance (100) selon la revendication 1, dans laquelle le dispositif de fixation (300) présente un évidement qui est formé pour fixer positivement l'unité de transmission (115) à un écrou de roue (200) du moyeu de roue (120) de la roue.

3. Installation de surveillance (100) selon l'une des revendications précédentes, l'unité d'émission (115) est conçue pour envoyer le signal du capteur (125) avec une puissance d'émission supérieure à
100 mW au dispositif d'avertissement (1000) et/ou comporte un répéteur pour amplifier le signal du capteur (125) et/ou pour transmettre le deuxième signal du capteur.

4. Installation de surveillance (100) selon l'une des revendications précédentes, dans laquelle l'émetteur
l'unité (115) est conçue pour envoyer le signal du capteur (125), qui comprend l'identification des informations qui identifient le dispositif de mesure (105).
rendu possible par un autre dispositif de mesure, et/ou qui comprend des informations sur l'état de charge d'un dispositif de stockage d'énergie du dispositif de mesure (105), l'unité de transmission (115) et/ou l'unité de capteur (110) étant disposées dans un boîtier étanche et/ou antidéflagrant (145 ; 915).

5. Installation de surveillance (100) selon l'une des revendications précédentes, dans laquelle le dispositif de mesure (105) comporte un module solaire (160) qui est conçu pour
pour charger un dispositif de stockage d'énergie du dispositif de mesure (105) en utilisant l'énergie solaire afin de fournir de l'énergie d'alimentation pour faire fonctionner le dispositif de mesure (105), et/ou comporte une connexion enfichable (505) pour charger de manière externe le dispositif de stockage d'énergie .

6. Installation de surveillance (100) selon l'une des revendications précédentes, dans laquelle l'unité de capteur (110) comporte une sonde de température (900) qui est conçue pour détecter une température comme paramètre physique et/ou dans laquelle l'unité de capteur (110) comporte un capteur de pression afin de détecter une pression en tant que paramètre physique détectant la pression des pneus.

7. Système d'alerte, comprenant un dispositif de surveillance (100) pour un véhicule selon l'une des revendications 1 à 6 et un dispositif d'alerte (1000) pour un véhicule.

8. Système d'avertissement selon la revendication 7, dans lequel le dispositif d'avertissement (1000) est conçu pour lire le signal de capteur (125) d'une installation de surveillance (100) et, à l'aide du signal de capteur (125), pour enregistrer un signal optique, acoustique et /ou sortie haptique du paramètre physique une unité de sortie (1100).

9. Système d'avertissement selon la revendication 8, dans lequel le dispositif d'avertissement (1000) est conçu pour générer un signal d'avertissement (1200) lorsque le paramètre physique atteint ou dépasse une valeur seuil définie.

10. Procédé (1400) d'exploitation d'une installation de surveillance (100) selon l'une des revendications 1 à 6, dans lequel le procédé (1400) comprend les étapes suivantes :
Détection (1405) du paramètre physique dans la zone de la roue à l'aide de l'unité de capteur (110) dans la position d'accouplement sur le premier emplacement du moyeu de roue (120) de la roue du véhicule (1200) pendant que le véhicule (1200) est en train de voyager; et envoyer (1410) le signal de capteur (125) représentant le paramètre physique au dispositif d'avertissement (1000) à l'aide de l'unité de transmission (115), qui est en position de fixation sur le deuxième emplacement du moyeu de roue (120) ou de la roue jante au moyen du dispositif de fixation (300). (122) de la roue est fixé pour permettre la surveillance du paramètre physique.
